(19) Europäisches Patentamt
European Patent Office
Office européen des brevets

(11) EP 2 799 486 B1

(12) EUROPEAN PATENT SPECIFICATION

(45) Date of publication and mention of the grant of the patent:
**23.08.2017 Bulletin 2017/34**

(21) Application number: **12861716.4**

(22) Date of filing: **26.12.2012**

(51) Int Cl.:
***C08L 23/08*** (2006.01) ***B32B 27/32*** (2006.01)
***C08J 5/18*** (2006.01) ***C08L 101/00*** (2006.01)

(86) International application number:
**PCT/JP2012/083617**

(87) International publication number:
**WO 2013/099927 (04.07.2013 Gazette 2013/27)**

# (54) ETHYLENE-BASED POLYMER COMPOSITION, AND MOLDED BODY OBTAINED FROM SAME

POLYMERZUSAMMENSETZUNG AUF ETHYLENBASIS UND FORMKÖRPER DARAUS

COMPOSITION DE POLYMÈRE À BASE D'ÉTHYLÈNE ET CORPS MOULÉ OBTENU À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 JP 2011288417**

(43) Date of publication of application:
**05.11.2014 Bulletin 2014/45**

(73) Proprietors:
- **Mitsui Chemicals, Inc.**
  **Tokyo 105-7117 (JP)**
- **Prime Polymer Co., Ltd.**
  **Tokyo 105-7117 (JP)**

(72) Inventors:
- **SATOH, Yasuo**
  **Ichihara-shi**
  **Chiba 299-0108 (JP)**
- **HARADA, Yasuyuki**
  **Sodegaura-shi**
  **Chiba 299-0265 (JP)**

(74) Representative: **J A Kemp**
**14 South Square**
**Gray's Inn**
**London WC1R 5JJ (GB)**

(56) References cited:
**EP-A1- 0 982 362** **EP-A1- 2 050 771**
**WO-A1-2007/094378** **WO-A1-2008/016059**
**WO-A2-02/04556** **JP-A- 2008 031 385**
**JP-A- 2008 031 386** **US-B1- 6 774 190**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 799 486 B1

## Description

Technical Field

The present invention relates to an ethylene polymer composition having a particularly higher formability than known ethylene polymers and having an excellent mechanical strength; the present invention also relates to a shaped article, film, and multilayer film formed of such an ethylene polymer composition.

Background Art

Ethylene polymers can be shaped by a variety of shaping techniques and used in a wide range of applications. Demand characteristics of ethylene polymers vary on the basis of such shaping techniques and applications. In the case where a cast film is formed with a T-die, a phenomenon called neck-in is caused, in which the film shrinks in the direction from the edges thereof to the center. This phenomenon reduces the width of the film and causes the thickness of the film to be larger at the edges thereof than at the central portion, which results in a decrease in a product yield. In order to minimize the occurrence of the neck-in, an ethylene polymer having a high melt tension relative to the molecular weight thereof is preferably selected. Such a property is necessary to eliminate dropping or breaking of a material in blow molding or to prevent movement or breaking of a bubble in inflation molding.

In the case where a cast film is formed with a T-die, a phenomenon called surging (also referred to as "draw resonance") is caused in some cases, in which a film has a regular variation in the thickness thereof in a direction in which the film is drawn. The surging causes the film to have an uneven thickness with the result that the film has a local variation in the mechanical strength thereof. Hence, in order to stably produce a film having an even thickness, the occurrence of the surging is properly avoided. It is believed that, in order to reduce the surging, a resin property is necessary in which strain hardening in elongation viscosity is enhanced by increase in a strain rate (for example, see Non Patent Document 1).

An ethylene polymer formed by use of a metallocene catalyst has excellent mechanical strength such as tensile strength, tear strength, and impact strength but has a small melt tension with the result that a large degree of neck-in is likely to occur. Furthermore, since such an ethylene polymer does not have a property such that strain hardening in elongation viscosity is enhanced by increase in a strain rate, the surging is likely to occur.

It is known that a high pressure low density polyethylene has a higher melt tension than an ethylene polymer formed by use of a metallocene catalyst and therefore has an excellent formability in terms of the occurrence of the neck-in. In addition, it is also known that since such a high pressure low density polyethylene has a property such that strain hardening in elongation viscosity is enhanced by increase in a strain rate, the surging is not caused. However, such a high pressure low density polyethylene tends to have unsatisfactory mechanical strength such as tensile strength, tear strength, and impact strength.

A composition of an ethylene polymer formed by use of a metallocene catalyst and a high pressure low density polyethylene has been proposed as an ethylene polymer which can solve a problem in formability, such as neck-in and surging in formation with a T-die and bubble instability in inflation molding, and which has a mechanical strength (for example, Patent Document 1). It is anticipated, however, that excessive amount of the high pressure low density polyethylene impairs mechanical strength such as tensile strength, tear strength, and impact strength. In the case where the amount of the high pressure low density polyethylene is insufficient, melt tension is not thoroughly enhanced; hence, it is anticipated that formability is impaired, such as a large degree of neck-in.

In order to overcome such problems, a variety of ethylene polymers to which long-chain branching has been introduced by a metallocene catalyst have been disclosed. Patent Document 2 discloses an ethylene polymer produced through solution polymerization in the presence of a catalyst composed of ethylenebis(indenyl)hafnium dichloride and methylaluminoxane, Patent Document 3 discloses an ethylene polymer produced through vapor phase polymerization in the presence of a silica-supported catalyst composed of ethylenebis(indenyl)zirconium dichloride and methylaluminoxane, Patent Document 4 discloses an ethylene polymer produced through solution polymerization in the presence of a constrained geometry catalyst, and Patent Document 5 discloses an ethylene polymer produced through vapor phase polymerization in the presence of a silica-supported catalyst composed of racemic and meso isomers of dimethylsilylenebis(2-methylindenyl)zirconium dichloride and methylaluminoxane. Patent Document 6 discloses an example of an experiment in which such a catalyst is used. In each disclosure, the ethylene polymer has high melt tension and excellent formability as compared with a linear ethylene polymer having no long-chain branching; however, it is known that a large degree of neck-in is still caused. It is known that, unlike a high pressure low density polyethylene, such ethylene polymers do not have a property such that strain hardening in elongation viscosity is enhanced by increase in a strain rate; thus, the problem of surging is not overcome in the ethylene polymers.

Patent Document 6 also discloses an ethylene polymer that satisfies a specific relationship between zero shear viscosity and weight average molecular weight. In this ethylene polymer, the specific relationship between zero shear

viscosity and weight average molecular weight is satisfied with the result that the ethylene polymer has a property such that strain hardening in elongation viscosity is enhanced by increase in a strain rate, which enables a reduction in surging. Furthermore, such an ethylene polymer has a higher formability than conventional ethylene polymers to which long-chain branching has been introduced by use of a metallocene catalyst, and the mechanical strength of a film formed thereof is also good as compared with a high pressure low density polyethylene.

However, in the case where ethylene polymers are used as wrapping materials or used to form bottles or tanks, a further enhancement in mechanical strength is desired to protect the content. In addition, further improvement of formability is also desired to further enhance a product yield.

In the case where ethylene polymers are used for forming films, an anti-blocking agent is generally added to prevent blocking; however, there have been problems such as a limited effect of the anti-blocking agent due to uneven dispersion thereof and an increased cost. Moreover, in some applications, use of the anti-blocking agent is not suitable in view of hygiene of the content. Hence, development of a film having a high blocking resistance without use of an anti-blocking agent is desired.

Citation List

Patent Literature

Patent Document 1: Japanese Unexamined Patent Application Publication No. H7-26079
Patent Document 2: Japanese Unexamined Patent Application Publication No. H2-276807
Patent Document 3: Japanese Unexamined Patent Application Publication No. H4-213309
Patent Document 4: International Publication No. 93/08221
Patent Document 5: Japanese Unexamined Patent Application Publication No. H8-311260
Patent Document 6: International Publication No. 2006/080578

Non Patent Literature

Non-patent Document 1: Toshitaka Kanai; Akira Funaki, Sen'i Gakkaishi 1986, Vol. 41, T-1

Summary of Invention

Technical Problem

The inventors have been intensively studied in view of the above-mentioned circumstance and found that a composition containing two ethylene polymers having specific melt properties and molecular structures enables particularly high bubble stability in inflation molding, a reduction in neck-in in formation with a T-die, elimination of surging, and excellent mechanical strength and that a film formed thereof has a particularly excellent blocking resistance, thereby completing the present invention.

It is an object of the present invention to provide an ethylene polymer composition having a particularly higher formability than known ethylene polymers and having an excellent mechanical strength, and it is another object of the present invention to provide a shaped article formed of such an ethylene polymer and a film and multilayer film having a particularly excellent blocking resistance.

Solution to Problem

An ethylene polymer composition ($\gamma$) of the present invention includes
an ethylene polymer ($\alpha$) which is a copolymer of ethylene and an $\alpha$-olefin having 4 to 10 carbon atoms and which satisfies each of the following requirements (1) to (5); and
an ethylene polymer ($\beta$) which is a copolymer of ethylene and an $\alpha$-olefin having 4 to 10 carbon atoms and which satisfies each of the following requirements (1') to (3'), wherein
weight fraction [$W\alpha$] of the ethylene polymer ($\alpha$) is in the range of not less than 0.2 and not more than 0.9, and weight fraction [$W\beta$] of the ethylene polymer ($\beta$) is in the range of not less than 0.1 and not more than 0.8 (the sum of the $W\alpha$ and the $W\beta$ is 1.0).

Ethylene polymer ($\alpha$) :

(1) a melt flow rate (MFR) at 190°C under a load of 2.16 kg is in the range of not less than 0.1 g/10 min and not more than 30 g/10 min,
(2) density is in the range of not less than 875 kg/m$^3$ and not more than 945 kg/m$^3$,
(3) the sum of the number of methyl branches [Me(/1000C)] and the number of ethyl branches [Et(/1000C)] per 1000 carbon atoms in $^{13}$C-NMR analysis [(Me + Et) (/1000C)] is not more than 1.80,
(4) a ratio $\eta_0/Mw^{6.8}$ of zero shear viscosity at 200°C [$\eta_0$(P)] to a weight average molecular weight measured by GPC-viscometry (GPC-VISCO) to the power 6.8 ($Mw^{6.8}$) is in the range of not less than $0.03 \times 10^{-30}$ and not more than $7.5 \times 10^{-30}$, and
(5) a ratio $[\eta]/Mw^{0.776}$ of intrinsic viscosity measured in decalin at 135°C [[$\eta$](dl/g)] to a weight average molecular weight measured by GPC-viscometry (GPC-VISCO) to the power 0.776 ($Mw^{0.776}$) is in the range of not less than $0.90 \times 10^{-4}$ and not more than $1.65 \times 10^{-4}$;

Ethylene polymer ($\beta$) :

(1') a melt flow rate (MFR) at 190°C under a load of 2.16 kg is in the range of not less than 0.1 g/10 min and not more than 10 g/10 min,
(2') the sum of the number of methyl branches [Me(/1000C)] and the number of ethyl branches [Et(/1000C)] per 1000 carbon atoms in $^{13}$C-NMR analysis [(Me + Et)(/1000C)] is not more than 1.80, and
(3') a ratio $[\eta]/Mw^{0.776}$ of intrinsic viscosity measured in decalin at 135°C [[$\eta$](dl/g)] to a weight average molecular weight measured by GPC-viscometry (GPC-VISCO) to the power 0.776 ($Mw^{0.776}$) is in the range of not less than $1.90 \times 10^{-4}$ and not more than $2.80 \times 10^{-4}$.

It is preferable that melt tension [MT$\gamma$(g)] of the ethylene polymer composition ($\gamma$) of the present invention at 190°C, melt tension [MT$\alpha$ (g)] of the ethylene polymer ($\alpha$), melt tension [MT$\beta$(g)] of the ethylene polymer ($\beta$), and the W$\alpha$ and W$\beta$ satisfy the following equation (Eq-1-1).

$$1.2 < MT\gamma/(MT\alpha \times W\alpha + MT\beta \times W\beta) \leq 3.0 \quad \ldots(Eq\text{-}1\text{-}1)$$

The ethylene polymer composition ($\gamma$) of the present invention may further include a thermoplastic resin other than any of the ethylene polymer ($\alpha$) and the ethylene polymer ($\beta$).
A film and shaped article of the present invention can be formed of the ethylene polymer composition ($\gamma$). The film of the present invention tends to have an excellent blocking resistance without use of an anti-blocking agent.
A multilayer film of the present invention has at least one surface layer that is a layer formed of the ethylene polymer composition ($\gamma$). The surface layer formed of the ethylene polymer composition ($\gamma$) is preferably free from an anti-blocking agent.

Advantageous Effects of Invention

According to the present invention, the ethylene polymer composition having a particularly excellent formability, a shaped article having an excellent mechanical strength, and a film and multilayer film having a particularly excellent blocking resistance can be produced.

Description of Embodiments

The ethylene polymer composition ($\gamma$) according to the present invention and ethylene polymers ($\alpha$) and ($\beta$) that are components thereof will now be specifically described.

<Components>

Ethylene Polymer (α)

The ethylene polymer (α) according to the present invention is a copolymer of ethylene and an α-olefin having 4 to 10 carbon atoms, preferably a copolymer of ethylene and an α-olefin having 6 to 10 carbon atoms. In the case where an α-olefin having 4 carbon atoms is employed, an α-olefin having 6 to 10 carbon atoms is preferably used in combination. Examples of the α-olefin having 4 to 10 carbon atoms, which is used for copolymerization with ethylene, include 1-butene, 1-hexene, 4-methyl-1-pentene, 1-octene, and 1-decene.

The ethylene polymer (α) has characteristics that satisfy the following requirements (1) to (5).

(1) A melt flow rate (MFR) at 190°C under a load of 2.16 kg is in the range of not less than 0.1 g/10 min and not more than 30 g/10 min. The lower limit of the range is preferably 0.5 g/10 min, and more preferably 1.0 g/10 min; the upper limit thereof is preferably 10 g/10 min, and more preferably 5.0 g/10 min. In the case where the melt flow rate (MFR) is greater than or equal to the above-mentioned lower limit, the shear viscosity of the ethylene polymer composition (γ) is not unnecessarily high and has a good formability. In the case where the melt flow rate (MFR) is less than or equal to the above-mentioned upper limit, the ethylene polymer composition (γ) has good mechanical strength such as tensile strength and heat seal strength.

A melt flow rate (MFR) strongly depends on a molecular weight; the larger the molecular weight is, the smaller the melt flow rate (MFR) is, and the smaller the molecular weight is, the larger the melt flow rate (MFR) is. It is known that the molecular weight of an ethylene polymer is determined by a composition ratio of hydrogen to ethylene (hydrogen/ethylene) in a polymerization system (for instance, Kazuo Soga et al., Catalytic Olefin Polymerization; Kodansha Scientific Ltd.: 1990; p. 376). Hence, the melt flow rate (MFR) of the ethylene polymer (α) can be adjusted by changing the composition rate of hydrogen/ethylene.

The melt flow rate (MFR) is measured at 190°C under a load of 2.16 kg in accordance with ASTM D 1238-89.

The MFR of the ethylene polymer (α) is also referred to as "MFRα" for distinction from the MFR of the ethylene polymer (β) which will be described later.

(2) The density is in the range of not less than 875 kg/m$^3$ and not more than 945 kg/m$^3$. The lower limit thereof is preferably 885 kg/m$^3$, and more preferably 900 kg/m$^3$; the upper limit is preferably 935 kg/m$^3$, and more preferably 930 kg/m$^3$. At a density greater than or equal to the lower limit, the surface of a film formed of the ethylene polymer composition (γ) is less sticky, and the film has an excellent blocking resistance; at a density less than or equal to the upper limit, a film formed of the ethylene polymer composition (γ) has a good impact resistance and mechanical strength such as heat seal strength and resistance to breakage.

The density depends on the α-olefin content in the ethylene polymer; the lower the α-olefin content is, the higher the density is, and the higher the α-olefin content is, the lower the density is. It is known that the α-olefin content in the ethylene polymer is determined on the basis of the composition ratio of α-olefin to ethylene (α-olefin/ethylene) in a polymerization system (for example, Walter Kaminsky, Makromol.Chem. 193; 1992; p. 606). Hence, changing the composition ratio of α-olefin/ethylene enables production of an ethylene polymer having a density that satisfies the above-mentioned range.

The density is measured in accordance with JIS K 7112; a strand obtained in the measurement of an MFR is heated at 100°C for an hour and subsequently left to stand at room temperature for an hour, and then the density thereof is measured by a density-gradient tube method.

(3) The sum of the number of methyl branches [Me(/1000C)] and the number of ethyl branches [Et(/1000C)] per 1000 carbon atoms in $^{13}$C-NMR analysis [(Me + Et)(/1000C)] is not more than 1.80, preferably not more than 1.30, more preferably not more than 0.80, and further preferably not more than 0.50. The number of methyl branches and the number of ethyl branches are herein each defined as the number per 1000 carbon atoms as described below.

It is known that, if short-chain branching, such as methyl branching and ethyl branching, is present in an ethylene polymer, the short-chain branching is incorporated into the crystal, and thus interplanar spacing of the crystal is increased with the result that the mechanical strength of resin is reduced (for instance, Zenjiro Osawa et al., Koubunshi no jumyou yosoku to choujumyouka gijutsu; NTS Inc.: 2002; p. 481). Hence, in the case where the sum of the number of methyl branches and the number of ethyl branches (A + B) is not more than 1.8, the ethylene polymer composition (γ) has a good mechanical strength.

The number of methyl branches and the number of ethyl branches in an ethylene polymer strongly depend on a polymerization process of the ethylene polymer, and the number of methyl branches and the number ethyl branches are larger in an ethylene polymer produced through high pressure radical polymerization than in an ethylene polymer produced through coordination polymerization involving use of a Ziegler catalyst. In coordination polymerization, the number of methyl braches and the number of ethyl branches in an ethylene polymer strongly depend on a composition ratio of propylene to ethylene and a composition ratio of 1-butene to ethylene in a polymerization system

(propylene/ethylene and 1-butene/ethylene). Hence, changing the composition ratio of 1-butene/ethylene enables adjustment of the sum (A + B) of the number of methyl braches and the number of ethyl branches in an ethylene polymer.

The number of methyl branches and the number of ethyl branches are determined as follows in $^{13}C$-NMR analysis. The analysis is carried out with a nuclear magnetic resonance apparatus ECP500 ($^{1}H$: 500 MHz) manufactured by JEOL Ltd. at integration from 10000 times to 30000 times. The peak of the main chain methylene (29.97 ppm) is employed as the chemical shift reference. Into a commercially available quartz glass tube used for NMR analysis and having a diameter of 10 mm, 250 to 400 mg of a sample and 3 ml of a 5:1 (volume ratio) mixed solution of special grade o-dichlorobenzene manufactured by Wako Pure Chemical Industries, Ltd. and benzene-d6 manufactured by ISOTEC are put, and the content is heated at 120°C and uniformly dispersed. Absorption in a NMR spectrum is assigned in accordance with Kagaku Ryouiki Zoukan vol. 141 NMR-Sousetsu to Jikken Guide [I] ; p. 132 to 133. In particular, the number of methyl branches per 1000 carbon atoms, namely, the number of methyl branches per 1000 carbon atoms constituting the polymer chain of an ethylene polymer is calculated from an integrated intensity ratio of absorption of methyl groups derived from the methyl branching (19.9 ppm) to the integral sum of absorption observed in the range of 5 to 45 ppm. The number of ethyl branches is calculated from an integrated intensity ratio of absorption of ethyl groups derived from the ethyl branches (10.8 ppm) to the integral sum of absorption observed in the range of 5 to 45 ppm.

(4) A ratio $\eta_0/Mw^{6.8}$ of zero shear viscosity at 200°C [$\eta_0$(P)] to a weight average molecular weight measured by GPC-viscometry (GPC-VISCO) to the power 6.8 ($Mw^{6.8}$) is in the range of not less than $0.03 \times 10^{-30}$ and not more than $7.5 \times 10^{-30}$. In particular, in the ethylene polymer ($\alpha$) used in the present invention, $\eta_0$ and Mw satisfy Equation (Eq-2)

$$0.03 \times 10^{-30} \leq \eta_0/Mw^{6.8} \leq 7.5 \times 10^{-30} \text{--------} \quad (Eq\text{-}2)$$

The lower limit is preferably $0.05 \times 10^{-30}$, and more preferably $0.8 \times 10^{-30}$; the upper limit is preferably $5.0 \times 10^{-30}$, and more preferably $3.0 \times 10^{-30}$.

Allowing $\eta_0/Mw^{6.8}$ to be in the range of not less than $0.03 \times 10^{-30}$ and not more than $7.5 \times 10^{-30}$ is equivalent to that, in double logarithmic plot of $\eta_0$ and Mw, log($\eta_0$) and log Mw are in a region defined by Equation (Eq-2').

$$6.8\ \mathrm{Log}(Mw)\ -31.523 \leq \mathrm{Log}(\eta_0) \leq 6.8\ \mathrm{Log}(Mw)\ -29.125 \text{--------} \quad (Eq\text{-}2')$$

In double logarithmic plot of zero shear viscosity [$\eta_0$(P)] to a weight average molecular weight (Mw), an ethylene polymer which has no long-chain branching but a linear structure and which does not have a property such that strain hardening in elongation viscosity is enhanced by increase in a strain rate follows a power law with a slope of 3.4. On the other hand, it is known that an ethylene polymer which has a number of relatively short long-chain branches and which has a property such that strain hardening in elongation viscosity is enhanced by increase in a strain rate has a zero shear viscosity [$\eta_0$(P)] smaller than a value obtained by a power law and that the slope thereof is greater than 3.4 (C Gabriel; H.Munstedt, J.Rheol., 47(3); 2003; 619 and H. Munstedt; D. Auhl, J. Non-Newtonian Fluid Mech.; 2005; 128 and 62-69), and a slope of 6.8 can be empirically employed. Determining a ratio of $\eta_0$ to $Mw^{6.8}$ is disclosed also in Japanese Unexamined Patent Application Publication No. 2011-1545.

In the case where the zero shear viscosity [$\eta_0$(P)] of the ethylene polymer ($\alpha$) at 200°C is not more than $7.5 \times 10^{-30} \times Mw^{6.8}$, the ethylene polymer composition ($\gamma$) is less likely to suffer from the occurrence of surging.

Furthermore, $\eta_0/Mw^{6.8}$ that is in the above-mentioned range gives an effect in which a film formed of the ethylene polymer ($\alpha$) and a film formed of the ethylene polymer composition ($\gamma$) each have a significantly excellent blocking resistance. It is presumed that such an effect can be developed for the following reason.

It is known that forming fine roughness on the surface of a film enables the blocking resistance to be remarkably enhanced. After a melted resin flows into a die, extensional stress is generated owing to an extensional flow. In the case where the extensional stress exceeds a critical value, brittle fracture is caused, and unstable flow at the outlet of the die, which is called "melt fracture", is generated, which leads to formation of fine roughness on the surface of a molded article (F.N. Cogswell, Polymer Melt Rheology; Wiley, 1981).

$\eta_0/Mw^{6.8}$ that is in the above-mentioned range enables extensional stress to be increased at a strain rate employed in general shaping processes with the result that melt fracture is generated. Since the melt fracture enables

formation of fine roughness on the surface of a film, the resulting film has a significantly excellent blocking resistance.

It is known that the number of long-chain branches and the length thereof have a strong effect on extensional stress; as the number of long-chain branches is increased, and as the length thereof is increased, the extensional stress is enhanced. It is believed that the number of long-chain branches is likely to be insufficient when $\eta_0/Mw^{6.8}$ is greater than the upper limit and that the length of the long-chain branches is likely to be insufficient when $\eta_0/Mw^{6.8}$ is lower than the lower limit.

It is believed that the relationship between zero shear viscosity [$\eta_0$(P)] and weight average molecular weight (Mw) depends on the amount and length of long-chain branching contained in an ethylene polymer. In particular, the larger the amount of long-chain branching is, or the shorter the length of the long-chain branching is, the more zero shear viscosity [$\eta_0$(P)] approaches the lower limit of the above-mentioned range; the smaller the amount of long-chain branching is, or the longer the length of the long-chain branching is, the more zero shear viscosity [$\eta_0$(P)] approaches the upper limit of the above-mentioned range.

The "long-chain branching" is herein defined as a branched structure having a length greater than or equal to the entanglement molecular weight (Me) in an ethylene polymer, and it is known that introduction of such long-chain branching enables significant changes in the melting properties and forming processability of the ethylene polymer (for instance, Kazuo Matsuura et al., Polyethylene Gijutsu Dokuhon; Kogyo Chosakai Publishing Co., Ltd.: 2001; p. 32 and 36). As described below, the ethylene polymer ($\alpha$) according to the present invention can be produced, for example, through polymerization of ethylene and an $\alpha$-olefin having 4 to 10 carbon atoms in the presence of an olefin polymerization catalyst which contains components (A), (B), and (C) and which will be described in "Catalyst for Producing Ethylene Polymer ($\alpha$)".

The inventors presume that long-chain branching is generated in the ethylene polymer ($\alpha$) through the following process in the synthetic mechanism of the ethylene polymer used in the present invention: ethylene and an $\alpha$-olefin having 4 to 10 carbon atoms are copolymerized in the presence of an olefin polymerization catalyst component containing the components (A) and (C) and optionally a solid support (S) which will be described later in "Catalyst for Producing Ethylene Polymer ($\alpha$)" to give a "macromonomer" having a number average molecular weight ranging from not less than 4000 and not more than 20000, preferably not less than 4000 and not more than 15000, which is a polymer having a vinyl group at an end thereof; and then copolymerization of the macromonomer is carried out with the aid of an olefin polymerization catalyst component containing the components (B) and (C) and optionally a solid support (S) so as to be competitive to the polymerization of ethylene and an $\alpha$-olefin having 4 to 10 carbon atoms.

The higher a composition ratio of the macromonomer to ethylene ([macromonomer]/[ethylene]) in a polymerization system is, the larger the long-chain branching content is. Increasing the percentage of the component (A) in the olefin polymerization catalyst, that is, a molar ratio ([A]/[A + B]) of the component (A) to the sum of the components (A) and (B) enables the composition ratio [macromonomer]/[ethylene] to be enhanced; hence, increasing the molar ratio ([A]/[A + B]) leads to an enhancement in the long-chain branching content. Increasing a composition ratio of hydrogen to ethylene (hydrogen/ethylene) in a polymerization system enables the molecular weight of the macromonomer to be reduced, so that the length of the long-chain branching to be introduced into the ethylene polymer is decreased.

Accordingly, changing the ratios [A]/[A + B] and hydrogen/ethylene enables production of an ethylene polymer having $\eta_0/Mw^{6.8}$ that satisfies the above-mentioned range.

Moreover, polymerization conditions for controlling the long-chain branching content are disclosed in, for example, WO 2007/034920.

The zero shear viscosity at 200°C [$\eta_0$(P)] is determined as follows.

The angular velocity [$\omega$(rad/sec)] variance of shear viscosity at a measurement temperature of 200°C ($\eta^*$) is measured in the range of $0.01 \leq \omega \leq 100$. A viscoelasticity measuring apparatus Physica MCR301 manufactured by Anton Paar GmbH is used in the measurement. A parallel plate having a size of 25 mm$\varphi$ is used as a sample holder, and the thickness of a sample is approximately 2.0 mm. The measurement is carried out at five points per digit of $\omega$. The strain amount is appropriately selected from the range of 3 to 10% so as to enable detection of torque in the measurement range and so as to avoid torque over. The sample used in the measurement of shear viscosity is prepared by press-forming with a press-forming machine manufactured by SHINTO Metal Industries Corporation under the following conditions so as to have a thickness of 2 mm: preheating temperature of 190°C, preheating time of 5 minutes, heating temperature of 190°C, heating time of 2 minutes, heating pressure of 100 kgf/cm$^2$, cooling temperature of 20°C, cooling time of 5 minutes, and cooling pressure of 100 kgf/cm$^2$.

Zero shear viscosity $\eta_0$ can be calculated by fitting the Carreau model represented by Equation (Eq-3) to an actually obtained rheological curve [angular velocity ($\omega$) variance of shear viscosity ($\eta^*$)] by a nonlinear least-squares method.

$$\eta^* = \eta_0[1 + (\lambda\omega)^a]^{(n-1)/a} \quad \text{--- (Eq-3)}$$

$\lambda$ represents a parameter with a dimension of time, and n represents a power law index of a material. The fitting by a nonlinear least-squares method is carried out such that d in Equation (Eq-4) is minimized.
[Math. 1]

$$d = \sum_{\omega=0.02512}^{100} \left[ Log_{10}\eta_{\exp}(\omega) - Log_{10}\eta_{calc}(\omega) \right]^2 \quad \cdots (Eq-4)$$

$\eta_{exp}(\omega)$ represents actually measured shear viscosity, and $\eta_{calc}(\omega)$ represents shear viscosity calculated from the Carreau model.

A weight average molecular weight (Mw) is measured as follows by GPC-viscometry with GPC/V2000 manufactured by Waters Corporation.

A guard column to be used is a Shodex AT-G, analytical columns to be used are two AT-806 columns, and detectors to be used are a differential refractometer and a three-capillary viscometer. A column temperature is 145°C, a mobile phase to be used is o-dichlorobenzene containing 0.3 weight% of BHT as an antioxidant, a flow rate is 1.0 ml/min, and a sample concentration is 0.1 weight%. Standard polystyrene to be used is manufactured by TOSOH CORPORATION. In calculation of molecular weight, an actual viscosity is calculated with the viscometer and the refractometer, and a weight average molecular weight (Mw) is calculated by universal calibration based on the actual viscosity.

(5) A ratio $[\eta]/Mw^{0.776}$ of intrinsic viscosity measured in decalin at 135°C [[η](dl/g)] to a weight average molecular weight measured by GPC-viscometry (GPC-VISCO) to the power 0.776 ($Mw^{0.776}$) is in the range of not less than $0.90 \times 10^{-4}$ and not more than $1.65 \times 10^{-4}$. In particular, in the ethylene polymer ($\alpha$) used in the present invention, [η] and Mw satisfy Equation (Eq-5).

$$0.90 \times 10^{-4} \le [\eta]/Mw^{0.776} \le 1.65 \times 10^{-4} \text{--------} \quad (Eq-5)$$

The lower limit is preferably $0.95 \times 10^{-4}$, and more preferably $1.00 \times 10^{-4}$; the upper limit is preferably $1.55 \times 10^{-4}$, and more preferably $1.45 \times 10^{-4}$.

Allowing $[\eta]/Mw^{0.776}$ to be in the range of not less than $0.90 \times 10^{-4}$ and not more than $1.65 \times 10^{-4}$ is equivalent to that, in double logarithmic plot of [η] and Mw, log([η]) and log(Mw) are in a region defined by Equation (Eq-5').

$$0.776\ Log(Mw)\ -4.046 \le Log([\eta]) \le 0.776\ Log(Mw)\ -3.783\ \text{--------} \quad (Eq-5')$$

It is known that introducing long-chain branching into an ethylene polymer enables the intrinsic viscosity [η](dl/g) to be small relative to the molecular weight thereof as compared with a linear ethylene polymer having no long-chain branching (for example, Walther Burchard, ADVANCES IN POLYMER SCIENCE, Branched Polymer II; 1999; 143; p. 137).

There has been a report in which, in accordance with the Mark-Houwink-Sakurada equation, the [η] of polyethylene is in proportion to Mv to the power 0.7, the [η] of polypropylene is in proportion to Mw to the power 0.80, and the [η] of poly-4-methyl-1-pentene is in proportion to Mn to the power 0.81 (for instance, R. Chiang, J. Polym. Sci., 36, 91 (1959): P.94, R. Chiang, J. Polym. Sci., 28, 235 (1958): P.237, A. S. Hoffman, B. A. Fries and P. C. Condit, J. Polym. Sci. Part C, 4, 109 (1963): P.119 Fig. 4).

The Mw to the power 0.776 is determined as a representative index of the copolymer of ethylene and an $\alpha$-olefin having 4 to 10 carbon atoms, and the requirement (5) specifies that the [η] of this copolymer is small relative to the molecular weight thereof as compared with conventional ethylene copolymers; this approach is disclosed in Patent Document 6.

Hence, in the case where the $[\eta]/Mw^{0.776}$ of the ethylene polymer ($\alpha$) is less than or equal to the above-mentioned upper limit, especially not more than $1.65 \times 10^{-4}$, the ethylene polymer ($\alpha$) has a number of long-chain branches, which enables the ethylene polymer composition ($\gamma$) to have an excellent formability and fluidity.

Since increasing the percentage of the component (A) contained in the olefin polymerization catalyst ([A]/[A + B]) leads to an increase in the long-chain branching content as described above, changing the ratio [A]/[A + B] enables

production of the ethylene polymer ($\alpha$) having the above-mentioned intrinsic viscosity [$\eta$].

The intrinsic viscosity [$\eta$](dl/g) is measured as follows with the aid of a decalin solvent.

Approximately 20 mg of a sample is dissolved in 15 ml of decalin, and the specific viscosity $\eta_{sp}$ is measured in an oil bath at 135°C. Then, 5 ml of a decalin solvent is further added to the decalin solution for dilution, and the specific viscosity $\eta_{sp}$ thereof is measured in the same manner. This dilution is further repeated twice, and the value of $\eta_{sp}/C$ obtained by extrapolation of concentration (C) to 0 is determined as the intrinsic viscosity [$\eta$] (see Equation (Eq-6)).

$$[\eta] = \lim(\eta_{sp}/C) \quad (C \rightarrow 0) \text{ ---------- } (Eq\text{-}6)$$

The ethylene polymer ($\alpha$) preferably further satisfies the following requirement (6) in addition to the requirements (1) to (5).

(6) A ratio [MTa/$\eta^*$(g/P)] of melt tension at 190°C [MT$\alpha$ (g)] to shear viscosity [$\eta^*$(P)] at 200°C and at an angular velocity of 1.0 rad/sec is in the range of not less than $1.0 \times 10^{-4}$ and not more than $7.0 \times 10^{-4}$. In particular, in the ethylene polymer ($\alpha$) used in the present invention, MT$\alpha$ and $\eta^*$ preferably satisfy Equation (Eq-7).

$$1.0 \times 10^{-4} \leq MT\alpha/\eta^* \leq 7.0 \times 10^{-4} \text{-------- } (Eq\text{-}7)$$

The upper limit is preferably $5.0 \times 10^{-4}$, and more preferably $3.0 \times 10^{-4}$.

[MT$\alpha$/$\eta^*$(g/P)] represents melt viscosity per unit shear viscosity, and large [MT$\alpha$/$\eta^*$(g/P)] leads to large melt tension relative to shear viscosity. In particular, in the case where [MT$\alpha$/$\eta^*$(g/P)] is greater than or equal to the lower limit, the ethylene polymer composition ($\gamma$) has a good balance between the extrusion characteristics and the bubble stability or neck-in. In the case where [MT$\alpha$/$\eta^*$(g/P)] is less than or equal to the upper limit, the ethylene polymer composition ($\gamma$) can be suitably processed at high speed.

It is believed that MT/$\eta^*$ depends on the long-chain branching content in the ethylene polymer; the larger the long-chain branching content is, the higher MT/$\eta^*$ is, and the smaller the long-chain branching content is, the lower MT/$\eta^*$ is.

Since increasing the percentage of the component (A) contained in the olefin polymerization catalyst ([A]/[A + B]) leads to an increase in the long-chain branching content as described above, changing the ratio [A]/[A + B] enables production of the ethylene polymer ($\alpha$) in which MT$\alpha$/$\eta^*$ is in the above-mentioned range.

The melt tension (MT) is measured as follows.

The melt tension (MT) is determined by measuring stress generated in drawing of a melted polymer at a constant rate. In the measurement, a capillary rheometer CAPILOGRAPH 1B manufactured by Toyo Seiki Seisaku-sho, Ltd. is used. The conditions in the measurement are as follows: a resin temperature of 190°C, a melting time of 6 minutes, a barrel diameter of 9.55 mm$\varphi$, an extrusion rate of 15 mm/min, a winding speed of 24 m/min (in the case where a molten filament is broken, the winding speed is decreased by 5 m/min), a nozzle diameter of 2.095 mm$\varphi$, and a nozzle length of 8 mm.

In order to determine shear viscosity ($\eta^*$) at 200°C and an angular velocity of 1.0 rad/sec, the angular velocity [$\omega$ (rad/sec)] variance of shear viscosity at a measurement temperature of 200°C ($\eta^*$) is measured in the range of $0.01 \leq \omega \leq 100$. A viscoelasticity measuring apparatus Physica MCR301 manufactured by Anton Paar GmbH is used in the measurement. A parallel plate having a size of 25 mm$\varphi$ is used as a sample holder, and the thickness of a sample is approximately 2.0 mm. The measurement is carried out at five points per digit of $\omega$. The strain amount is appropriately selected from the range of 3 to 10% so as to enable detection of torque in the measurement range and so as to avoid torque over. The sample used in the measurement of shear viscosity is prepared by press-forming with a press-forming machine manufactured by SHINTO Metal Industries Corporation under the following conditions so as to have a thickness of 2 mm: preheating temperature of 190°C, preheating time of 5 minutes, heating temperature of 190°C, heating time of 2 minutes, heating pressure of 100 kgf/cm$^2$, cooling temperature of 20°C, cooling time of 5 minutes, and cooling pressure of 100 kgf/cm$^2$.

The ethylene polymer ($\alpha$) preferably further satisfies the following condition (7).

(7) The molecular weight at the largest weight fraction (peak top M) in a molecular weight distribution curve obtained in GPC analysis is in the range of not less than $1.0 \times 10^{4.20}$ and not more than $1.0 \times 10^{4.60}$. The lower limit is preferably $1.0 \times 10^{4.30}$, and the upper limit is preferably $1.0 \times 10^{4.50}$.

It is known that a low-molecular-weight component has a strong effect on the mechanical strength of an ethylene polymer. It is presumed that the presence of a low-molecular-weight component leads to an increase in the number of molecular ends that are assumed to be points at which fracture begins with the result that the mechanical strength is reduced (Kazuo Matsuura; Naotaka Mikami, Polyethylene Gijutsu Dokuhon; Kogyo Chosakai Publishing Co., Ltd.: 2001; p. 45). In the case where the molecular weight at the largest weight fraction (peak top M) in a molecular weight distribution curve obtained in GPC analysis is not less than $1.0 \times 10^{4.20}$, the amount of the low-molecular-weight component, which has an adverse effect on the mechanical strength, is small, which gives excellent mechanical strength.

It is known that the molecular weight at the largest weight fraction (peak top M) in a molecular weight distribution curve obtained in GPC analysis is determined by a composition ratio of hydrogen to ethylene in a polymerization system (hydrogen/ethylene) (for example, Kazuo Soga et al., Catalytic Olefin Polymerization; Kodansha Scientific Ltd.: 1990; p. 376). Hence, changing the composition rate of hydrogen/ethylene enables adjustment of the molecular weight at the largest weight fraction (peak top M) in a molecular weight distribution curve.

The molecular weight at the largest weight fraction (peak top M) in a molecular weight distribution curve is obtained with a gel permeation chromatograph alliance GPC2000 manufactured by Waters Corporation (high-temperature size exclusion chromatograph) under the following conditions.

[Apparatus Used and Conditions]

Analysis software: chromatography data system Empower (Waters Corporation)
Column: TSKgel $GMH_6$-HT $\times$ 2 and TSKgel $GMH_6$-HTL $\times$ 2
(inner diameter: 7.5 mm and length: 30 cm, manufactured by TOSOH CORPORATION)
Mobile phase: o-dichlorobenzene (manufactured by Wako Pure Chemical Industries, Ltd., special grade chemical)
Detector: differential refractometer (embedded in the apparatus)
Column temperature: 140°C
Flow rate: 1.0 mL/min
Feed: 500 μL
Sampling time interval: one second
Sample concentration: 0.15% (w/v)
Molecular weight calibration: monodisperse polystyrene (manufactured by TOSOH CORPORATION)/molecular weight of 495 to molecular weight of 20600000

A molecular weight distribution curve is formed in terms of the molecular weight of polyethylene on the basis of procedures of general calibration described in Z. Crubisic; P. Rempp; H. Benoit, J. Polym. Sci., B5, 1967, 753. The molecular weight at the largest weight fraction (peak top M) is calculated from this molecular weight distribution curve.

<u>Ethylene Polymer (β)</u>

The ethylene polymer (β) according to the present invention is a copolymer of ethylene and an α-olefin having 4 to 10 carbon atoms, preferably a copolymer of ethylene and an α-olefin having 6 to 10 carbon atoms. In the case where an α-olefin having 4 carbon atoms is employed, an α-olefin having 6 to 10 carbon atoms is preferably used in combination. Examples of the α-olefin having 4 to 10 carbon atoms, which is used for copolymerization with ethylene, include 1-butene, 1-hexene, 4-methyl-1-pentene, 1-octene, and 1-decene.

The ethylene polymer (β) has characteristics that satisfy the following requirements (1') to (3').

(1') A melt flow rate (MFR) at 190°C under a load of 2.16 kg is in the range of not less than 0.1 g/10 min and not more than 10 g/10 min. The lower limit of the range is preferably 0.5 g/10 min, and more preferably 1.0 g/10 min; the upper limit thereof is preferably 8.0 g/10 min, and more preferably 5.0 g/10 min. In the case where the melt flow rate (MFR) is greater than or equal to the lower limit, a film formed of the ethylene polymer composition (γ) has a good appearance in which fish eyes have been reduced. In the case where the melt flow rate (MFR) is less than or equal to the upper limit, the ethylene polymer composition (γ) has a high melt tension, which leads to a good formability such as high bubble stability. In the case where the melt flow rate (MFR) is greater than the upper limit, the ethylene polymer composition (γ) has a low melt tension, which may lead to impaired formability such as low bubble stability. The MFR of the ethylene polymer (β) is also referred to as "MFRβ" for distinction from the MFR of the ethylene polymer (α).

(2') The sum of the number of methyl branches [Me(/1000C)] and the number of ethyl branches [Et(/1000C)] per 1000 carbon atoms in $^{13}$C-NMR analysis [(Me + Et)(/1000C)] is not more than 1.80, preferably not more than 1.30,

more preferably not more than 0.80, and further preferably not more than 0.50. In the case where the sum of the number of methyl branches and the number of ethyl branches (A + B) is less than or equal to the above-mentioned value, the ethylene polymerization composition (γ) has a good mechanical strength.

(3') A ratio $[\eta]/Mw^{0.776}$ of intrinsic viscosity measured in decalin at 135°C [[η](dl/g)] to a weight average molecular weight measured by GPC-viscometry (GPC-VISCO) to the power 0.776 ($Mw^{0.776}$) is in the range of not less than $1.90 \times 10^{-4}$ and not more than $2.80 \times 10^{-4}$. In particular, in the ethylene polymer (β) used in the present invention, [η] and Mw satisfy Equation (Eq-8).

$$1.90 \times 10^{-4} \leq [\eta]/Mw^{0.776} \leq 2.80 \times 10^{-4} \text{--------} \quad (Eq\text{-}8)$$

Allowing $[\eta]/Mw^{0.776}$ to be in the range of not less than $1.90 \times 10^{-4}$ and not more than $2.80 \times 10^{-4}$ is equivalent to that, in double logarithmic plot of [η] and Mw, log([η]) and log(Mw) are in a region defined by Equation (Eq-8').

$$0.776\ Log(Mw)\ -3.721 \leq Log([\eta]) \leq 0.776\ Log(Mw)\ -3.553 \text{ --------} \quad (Eq\text{-}8')$$

It is known that an ethylene polymer containing no long-chain branching has a large intrinsic viscosity [η(dl/g) relative to the molecular weight thereof as compared with an ethylene polymer having long-chain branching as described above. Hence, an ethylene polymer in which $[\eta]/Mw^{0.776}$ is not less than $1.90 \times 10^{-4}$ is substantially a linear ethylene polymer containing no long-chain branching. In the present invention in which such an ethylene polymer is used, the melt tension of the ethylene polymer composition (γ) is enhanced, which enables excellent stability.

The ethylene polymer (β) preferably further satisfies the following requirement (4') in addition to the requirements (1') to (3').

(4') The density is in the range of not less than 875 kg/m$^3$ and not more than 970 kg/m$^3$. The lower limit is preferably 885 kg/m$^3$, and the upper limit is preferably 950 kg/m$^3$. At a density greater than or equal to the lower limit, the surface of a film formed of the ethylene polymer composition (γ) is further less sticky, and the film has an excellent blocking resistance; at a density less than or equal to the upper limit, a film formed of the ethylene polymer composition (γ) has a further good impact resistance and mechanical strength such as heat seal strength and resistance to breakage.

<Ethylene Polymer Composition (γ)>

The ethylene polymer composition (γ) according to the present invention contains
the ethylene polymer (α) and the ethylene polymer (β) ;
assuming that the sum of the weight fraction [Wα] of the ethylene polymer (α) and the weight fraction [Wβ] of the ethylene polymer (β) is 1.0, Wα is in the range of not less than 0.2 and not more than 0.9, and Wβ is in the range of not less than 0.1 and not more than 0.8. In this case, the Wα is preferably in the range of not less than 0.2 and not more than 0.8, more preferably not less than 0.3 and not more than 0.7. Within such a range, the ethylene polymer composition (γ) has a good balance between the mechanical strength and the molding processability.

The melt tension [MTγ(g)] of the ethylene polymer composition (γ) at 190°C, the melt tension [MTα(g)] of the ethylene polymer (α), the melt tension [MTβ(g)] of the ethylene polymer (β), and the Wα and Wβ preferably satisfy Equation (Eq-1-1).

$$1.2 < MT\gamma/(MT\alpha \times W\alpha + MT\beta \times W\beta) \leq 3.0 \quad ...(Eq\text{-}1\text{-}1)$$

The Wα and Wβ preferably satisfy Equation (Eq-1-2)

$$1.2 < MT\gamma/(MT\alpha \times W\alpha + MT\beta \times W\beta) \leq 2.8 \quad ...(Eq\text{-}1\text{-}2)$$

and more preferably satisfy Equation (Eq-1-3).

$$1.2 < MT\gamma/(MT\alpha \times W\alpha + MT\beta \times W\beta) \leq 2.5 \quad ...(Eq\text{-}1\text{-}3)$$

Each of Equations (Eq-1-1) to (Eq-1-3) shows that the melt tension (MTγ) of the ethylene polymer composition (γ) is larger than 1.2 times a value obtained from the melt tension (MT) of each component assuming that the melt tension (MT) exhibits additivity based on a weight fraction, in a preferred embodiment of the present invention. Large MTγ is likely to enhance bubble stability. In the case where the MTγ is greater than the upper limit, a drawing rate tends to be decreased in formation of a film, which leads to a reduction in productivity.

As the MFR of the component β is smaller than the MFR of the component α, in other words, as MFRβ/MFRα is decreased, the MTγ value relative to (MTα × Wα + MTβ × Wβ) tends to be increased. MFRβ/MFRα is preferably in the range of not less than 0.01 and not more than 10. The lower limit is preferably 0.1, and more preferably 0.2; the upper limit is preferably 7.0, and more preferably 5.0. In the case where MFRβ/MFRα is greater than or equal to the lower limit, a film formed of the ethylene polymer composition (γ) has a good appearance in which fish eyes have been reduced. In the case where the melt flow rate (MFR) is less than or equal to the above-mentioned upper limit, the ethylene polymer composition (γ) has a high melt tension, which leads to good formability such as high bubble stability.

It is known that MT is greatly affected by relaxation of a molecular chain in extensional deformation; hence, the less a molecular chain is likely to be relaxed, the more MT tends to be increased.

As described above, it is presumed that the [η] and Mw of the ethylene polymer (α) satisfy a specific relationship and that the ethylene polymer (α) has long-chain branching. The inventors have the following idea: in the case where the ethylene polymer (α) is present alone without the presence of the ethylene polymer (β), strong entanglement of molecular chains having long-chain branching is not formed in the ethylene polymer (α) owing to steric hindrance. Instead, weak entanglement of molecular chains having long-chain branching and entanglement of a molecular chain having long-chain branching and a low-molecular-weight substance (MFR ≥ 100 g/10 min) which has no long-chain branching and which is assumed to be contained along with the molecular chain having long-chain branching are mainly formed, and such entanglement is part which is least likely to be relaxed in the ethylene polymer (α).

Mixing the ethylene polymer (α) with the ethylene polymer (β) having a specific MFR leads to new formation of entanglement of a molecular chain contained in the ethylene polymer (α) and having long-chain branching and the linear molecular chain of the ethylene polymer (β), and this entanglement is part which is least likely to be relaxed; thus, the MT of the ethylene polymer composition (γ) is surprisingly remarkably larger than the value obtained from the MT of the ethylene polymer (α) and the MT of the ethylene polymer (β) on the basis of the additivity of melt tension. There is still a possibility that the ethylene polymer (α) may also contain a component similar to a linear polymer component contained in the ethylene polymer (β) ; however, it is believed that such a possibility is relatively small and that entanglement of a molecular chain having long-chain branching and a linear molecular chain is less likely to give the above-mentioned effect.

Further surprisingly, a film formed of the ethylene polymer composition (γ) in which the ethylene polymer (α) has been mixed with the ethylene polymer (β) has an excellent blocking resistance which is equivalent to or greater than that of a film formed of the ethylene polymer (α). This is presumed to be brought about by the effect of entanglement of the molecular chains of the ethylene polymers (α) and (β) having specific structures.

The ethylene polymer composition (γ) according to the present invention may substantially consist of the ethylene polymer (α) and the ethylene polymer (β), but is not limited thereto; the ethylene polymer composition (γ) can include, in addition to the ethylene polymer (α) and the ethylene polymer (β), a thermoplastic resin other than any of the ethylene polymer (α) and the ethylene polymer (β) (hereinafter referred to as "another thermoplastic resin"). Mixing the ethylene polymer (α) and the ethylene polymer (β) with the "another thermoplastic resin" enables production of the ethylene polymer composition (γ) which is a thermoplastic resin composition and which has an excellent formability and mechanical strength. A mixing ratio of the combination of the ethylene polymer (α) and the ethylene polymer (β) to the "another thermoplastic resin" is in the range of 99.9/0.1 to 0.1/99.9, preferably 90/10 to 10/90, and more preferably 70/30 to 30/70.

Another Thermoplastic Resin

The "another thermoplastic resin" which can be added to the ethylene polymer composition (γ) can be a crystalline thermoplastic resin, such as polyolefin, polyamide, polyester, or polyacetal, or a non-crystalline thermoplastic resin such as polystyrene, an acrylonitrile·butadiene·styrene copolymer (ABS), polycarbonate, polyphenylene oxide, or polyacrylate. Furthermore, polyvinyl chloride can be suitably used.

Specific examples of the polyolefin include ethylene polymers, propylene polymers, butene polymers, 4-methyl-1-pentene polymers, 3-methyl-1-butene polymers, and hexene polymers. Among these, ethylene polymers, propylene polymers, and 4-methyl-1-pentene polymer are preferred. In the case where ethylene polymers are employed, the ethylene polymers according to the present invention, conventional ethylene polymers, or ethylene/polar group-containing

vinyl copolymers can be used; however, conventional ethylene polymers are more preferred.

Specific examples of the polyester include aromatic polyesters such as polyethylene terephthalate, polyethylene naphthalate, and polybutylene terephthalate; polycaprolactone; and polyhydroxybutyrate.

Specific examples of the polyamide include aliphatic polyamides, such as nylon-6, nylon-66, nylon-10, nylon-12, and nylon-46, and aromatic polyamides synthesized from aromatic dicarboxylic acids and aliphatic diamines.

Specific examples of the polyacetal include polyformaldehyde (polyoxymethylene), polyacetaldehyde, polypropionaldehyde, and polybutyraldehyde. Among these, polyformaldehyde is particularly preferred.

The polystyrene may be either a styrene homopolymer or a binary copolymer of styrene and acrylonitrile, methyl methacrylate, or $\alpha$-methylstyrene.

A preferred example of the ABS is an ABS containing 20 to 35 mol% of a structural unit derived from acrylonitrile, 20 to 30 mol% of a structural unit derived from butadiene, and 40 to 60 mol% of a structural unit derived from styrene.

Examples of the polycarbonate include polymers which can be obtained from bis(4-hydroxyphenyl)methane, 1,1-bis(4-hydroxyphenyl)ethane, 2,2-bis(4-hydroxyphenyl)propane, and 2,2-bis(4-hydroxyphenyl)butane. Among these, a polycarbonate which can be obtained from 2,2-bis(4-hydroxyphenyl)propane is particularly preferred.

A preferred example of the polyphenylene oxide is poly(2,6-dimethyl-1,4-phenylene oxide).

Preferred examples of the polyacrylate include polymethyl methacrylate and polybutyl acrylate.

The above-mentioned thermoplastic resins may be used solely or in combination. In particular, the thermoplastic resin is preferably polyolefin, and more preferably an ethylene polymer.

## Other Components

In addition to the above-mentioned "another thermoplastic resin", the ethylene polymer composition ($\gamma$) of the present invention may further contain additives without departing from the object of the present invention, such as a weathering stabilizer, a thermal stabilizer, an antistatic agent, an anti-slip agent, an anti-blocking agent, an antifogging agent, a lubricant, a pigment, a dye, a nucleating agent, a plasticizer, an age resistor, a hydrochloric acid absorbent, and an antioxidant.

The total amount of these "other components" is typically not more than 10 parts by weight, preferably not more than 1 part by weight, and more preferably not more than 0.5 parts by weight relative to 100 parts by weight of the ethylene polymer composition ($\gamma$).

Production processes of the ethylene polymer ($\alpha$), ethylene polymer ($\beta$), and ethylene polymer composition ($\gamma$) in the present invention will now be described.

## <Production Process of Ethylene Polymer ($\alpha$)>

The ethylene polymer ($\alpha$) used in the present invention can be produced through polymerization of ethylene and an $\alpha$-olefin having 4 to 10 carbon atoms in the presence of a catalyst for producing ethylene polymer which will be described later.

In the present invention, liquid-phase polymerization, such as melt polymerization or suspension polymerization, or vapor-phase polymerization can be employed, and suspension polymerization and vapor-phase polymerization are preferably used.

Specific examples of inert hydrocarbon media usable in the liquid-phase polymerization include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; halogenated hydrocarbons such as ethylene chloride, chlorobenzene, and dichloromethane; and mixtures thereof. Furthermore, the $\alpha$-olefin itself can be also used as a solvent.

## Catalyst for Producing Ethylene Polymer ($\alpha$)

The ethylene polymer ($\alpha$) used in the present invention can be efficiently produced through polymerization of ethylene and an $\alpha$-olefin having 4 to 10 carbon atoms in the presence of a catalyst containing the components (A), (B), and (C).

The catalyst for producing the ethylene polymer ($\alpha$), which is used in the present invention, may include the components (A), (B), and (C), which will be described later, as well as a solid support (S) and a component (G).

Each component contained in the olefin polymerization catalyst will now be described.

## Component (A)

The component (A) usable in the present invention is a bridged metallocene compound represented by Formula

(I).

[Chem. 1]

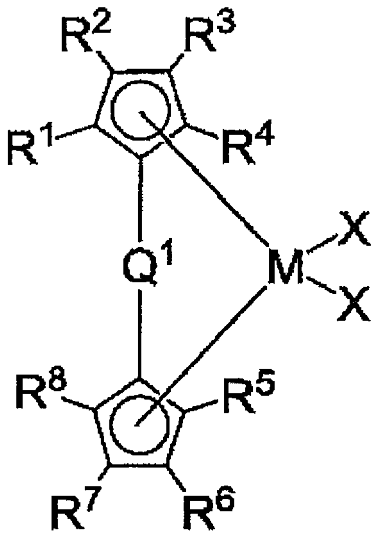

..... (I)

In Formula (I), M represents a transition metal atom belonging to Group 4 on the periodic table; in particular, M represents a transition metal atom selected from titanium, zirconium, and hafnium and is preferably zirconium.

$R^1$ to $R^8$ are selected from a hydrogen atom, hydrocarbon groups having 1 to 20 carbon atoms, halogen-containing groups, oxygen-containing groups, nitrogen-containing groups, boron-containing groups, sulfur-containing groups, phosphorus-containing groups, silicon-containing groups, germanium-containing groups, and tin-containing groups and may be the same as or different from each other; however, not all of them are hydrogen atoms. Adjoining groups of $R^1$ to $R^8$ may be connected to each other to form an aliphatic ring.

Examples of the hydrocarbon group include an alkyl group, a cycloalkyl group, an alkenyl group, an aryl group, and an arylalkyl group. Examples of the alkyl group include a methyl group, an ethyl group, an n-propyl group, an isopropyl group, an n-butyl group, an isobutyl group, an s-butyl group, a t-butyl group, an n-pentyl group, a neopentyl group, an n-hexyl group, an n-octyl group, a nonyl group, a dodecyl group, and an eicosyl group. Examples of the cycloalkyl group include a cyclopropyl group, a cyclobutyl group, a cyclopentyl group, a cyclohexyl group, a norbornyl group, and an adamantyl group. Examples of the alkenyl group include a vinyl group, a propenyl group, and a cyclohexenyl group. Examples of the aryl group include phenyl, tolyl, dimethylphenyl, trimethylphenyl, ethylphenyl, propylphenyl, biphenyl, α- or β-naphthyl, methylnaphthyl, anthracenyl, phenanthryl, benzylphenyl, pyrenyl, acenaphthyl, phenalenyl, aceanthrylenyl, tetrahydronaphthyl, indanyl, and biphenylyl. Examples of the arylalkyl group include benzyl, phenylethyl, and phenylpropyl.

It is preferred that $R^1$ to $R^8$ moieties be selected from a hydrogen atom and an alkyl group having 1 to 15 carbon atoms, it is more preferred that at least six of $R^1$ to $R^8$ moieties be hydrogen atoms, and it is especially preferred that seven of $R^1$ to $R^8$ moieties be hydrogen atoms and that the rest be an alkyl group having 3 to 15 carbon atoms.

$Q^1$ is a divalent group that serves to connect two ligands to each other and selected from hydrocarbon groups having 1 to 20 carbon atoms such as alkylene groups, substituted alkylene groups, and alkylidene groups; halogen-containing groups; silicon-containing groups; germanium-containing groups; and tin-containing groups; in particular, silicon-containing groups are preferred.

Specific examples of the alkylene groups, substituted alkylene groups, and alkylidene groups include alkylene groups such as methylene, ethylene, propylene, and butylene; substituted alkylene group such as isopropylidene, diethylmethylene, dipropylmethylene, diisopropylmethylene, dibutylmethylene, methylethylmethylene, methylbutylmethylene, methyl-t-butylmethylene, dihexylmethylene, dicyclohexylmethylene, methylcyclohexylmethylene, methylphenylmethylene, diphenylmethylene, ditolylmethylene, methylnaphthylmethylene, dinaphthylmethylene, 1-methylethylene, 1,2-dimethylethylene, and 1-ethyl-2-methylethylene; and cycloalkylidene groups, such as cyclopropylidene, cyclobutylidene, cyclopentylidene, cyclohexylidene, cycloheptylidene, bicyclo[3.3.1]nonylidene, norbornylidene, adamantylidene, tetrahydronaphthylidene, and dihydroindanylidene, and alkylidene groups such as ethylidene, propylidene, and butylidene.

Examples of the silicon-containing groups include silylene, methylsilylene, dimethylsilylene, diisopropylsilylene, dibutylsilylene, methylbutylsilylene, methyl-t-butylsilylene, dicyclohexylsilylene, methylcyclohexylsilylene, methylphenylsilylene, diphenylsilylene, ditolylsilylene, methylnaphthylsilylene, dinaphthylsilylene, cyclodimethylenesilylene, cyclotrimethylenesilylene, cyclotetramethylenesilylene, cyclopentamethylenesilylene, cyclohexamethylenesilylene, and cycloheptamethylenesilylene. In particular, dialkylsilylene groups such as a dimethylsilylene group and a dibutylsilylene group are preferred.

Xs are each independently an atom or group selected from a hydrogen atom, a halogen atom, a hydrocarbon group, a halogen-containing hydrocarbon group, a silicon-containing group, an oxygen-containing group, a sulfur-containing group, a nitrogen-containing group, and a phosphorus-containing group and preferably a halogen atom or a hydrocarbon group. Examples of the halogen atom include a fluorine atom, a chloride atom, a bromine atom, and an iodine atom; in particular, a chlorine atom is preferred. Examples of the hydrocarbon group include the same hydrocarbon groups as specified for $R^1$ to $R^8$; in particular, an alkyl group having 1 to 20 carbon atoms is especially preferred.

Specific examples of preferred compounds used as the component (A) represented by Formula (I) include dimethylsilylenebis(cyclopentadienyl)zirconium dichloride, dimethylsilylenebis(2-methylcyclopentadienyl)zirconium dichloride, dimethylsilylenebis(3-methylcyclopentadienyl)zirconium dichloride, dimethylsilylenebis(3-n-butylcyclopentadienyl)zirconium dichloride, dimethylsilylene(cyclopentadienyl)(3-ethylcyclopentadienyl)zirconium dichloride, dimethylsilylene(cyclopentadienyl)(3-n-propylcyclopentadienyl)zirconium dichloride, dimethylsilylene(cyclopentadienyl)(3-n-butylcyclopentadienyl)zirconium dichloride, dimethylsilylene(cyclopentadienyl)(3-n-octylcyclopentadienyl)zirconium dichloride, dibutylsilylene(cyclopentadienyl)(3-n-propylcyclopentadienyl)zirconium dichloride, trifluoromethylbutylsilylene(cyclopentadienyl)(3-n-propylcyclopentadienyl)zirconium dichloride, trifluoromethylbutylsilylene(cyclopentadienyl)(3-n-butylcyclopentadienyl)zirconium dichloride, and trifluoromethylbutylsilylene(cyclopentadienyl)(3-n-octylcyclopentadienyl)zirconium dichloride; specific examples of a more preferred compound include dimethylsilylene(cyclopentadienyl)(3-n-propylcyclopentadienyl)zirconium dichloride and dimethylsilylene(3-n-butylcyclopentadienyl)(cyclopentadienyl)zirconium dichloride.

Component (B)

The component (B) usable in the present invention is a bridged metallocene compound represented by Formula (II).

[Chem. 2]

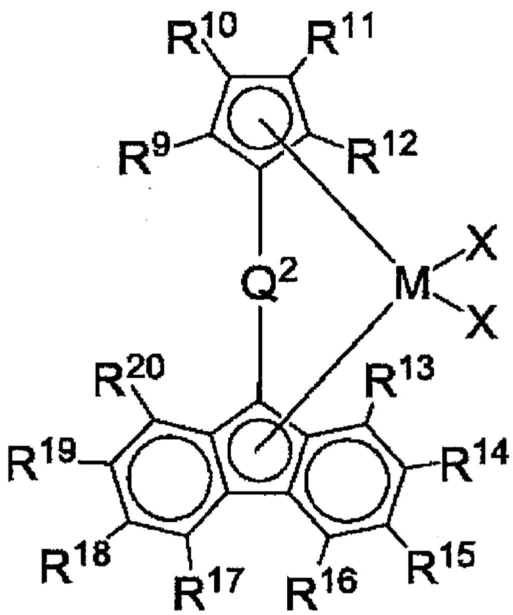

..... (II)

In Formula (II), M represents a transition metal atom belonging to Group 4 on the periodic table; in particular,

M represents a transition metal atom selected from titanium, zirconium, and hafnium and is preferably zirconium.

$R^9$ to $R^{20}$ are selected from a hydrogen atom, hydrocarbon groups, halogen-containing groups, oxygen-containing groups, nitrogen-containing groups, boron-containing groups, sulfur-containing groups, phosphorus-containing groups, silicon-containing groups, germanium-containing groups, and tin-containing groups and may be the same as or different from each other, and adjoining two groups of them may be connected to each other to form a ring. It is preferred that $R^9$ to $R^{20}$ moieties be selected from a hydrogen atom and a hydrocarbon group, and it is more preferred that $R^9$ to $R^{12}$ each be a hydrogen atom and that $R^{13}$ to $R^{20}$ each be a hydrogen atom or an alkyl group having 1 to 20 carbon atoms.

$Q^2$ is a divalent group that serves to connect two ligands to each other and selected from hydrocarbon groups having 1 to 20 carbon atoms such as alkylene groups, substituted alkylene groups, and alkylidene groups; halogen-containing groups; silicon-containing groups; germanium-containing groups; and tin-containing groups; in particular, hydrocarbon groups having 1 to 20 carbon atoms, such as alkylene groups, substituted alkylene groups, and alkylidene groups, and silicon-containing groups are preferred, and hydrocarbon groups having 1 to 10 carbon atoms, such as alkylene groups, substituted alkylene groups, and alkylidene groups are especially preferred.

Examples of Xs include the same ones as specified for Xs in Formula (I).

Specific examples of a preferred compound used as the component (B) represented by Formula (II) include isopropylidene(cyclopentadienyl)(fluorenyl)zirconium dichloride, isopropylidene(cyclopentadienyl)(2,7-di-t-butyl-9-fluorenyl)zirconium dichloride, isopropylidene(cyclopentadienyl)(3,6-di-t-butylfluorenyl)zirconium dichloride, isopropylidene(cyclopentadienyl)(octamethyloctahydridodibenzo fluorenyl)zirconium dichloride, dibutylmethylene(cyclopentadienyl)(fluorenyl)zirconium dichloride, dibutylmethylene(cyclopentadienyl)(2,7-di-t-butylfluorenyl)zirconium dichloride, dibutylmethylene(cyclopentadienyl)(3,6-di-t-butylfluorenyl)zirconium dichloride, dibutylmethylene(cyclopentadienyl)(octamethyloctahydridodiben zofluorenyl)zirconium dichloride, cyclohexylidene(cyclopentadienyl)(fluorenyl)zirconium dichloride, cyclohexylidene(cyclopentadienyl)(2,7-di-t-butylfluorenyl)zirconium dichloride, cyclohexylidene(cyclopentadienyl)(3,6-di-t-butylfluorenyl)zirconium dichloride, cyclohexylidene(cyclopentadienyl) (octamethyloctahydridodibenzofluorenyl)zirconium dichloride, dimethylsilyl(cyclopentadienyl)(fluorenyl)zirconium dichloride, dimethylsilyl(cyclopentadienyl)(2,7-di-t-butylfluorenyl)zirconium dichloride, dimethylsilyl(cyclopentadienyl)(3,6-di-t-butylfluorenyl)zirconium dichloride, and dimethylsilyl(cyclopentadienyl)(octamethyloctahydridodibenzof luorenyl)zirconium dichloride; a specific example of a more preferred compound is isopropylidene(cyclopentadienyl)(2,7-di-t-butyl-9-fluorenyl)zirconium dichloride.

Component (C)

The component (C) that can be used in the present invention is at least one compound selected from the group consisting of the following compounds (c-1) to (c-3).

In particular, at least one compound selected from

(c-1) an organometallic compound represented by Formula (III), (IV), or (V)

$$R^a_mAl(OR^b)_nH_pX_q\cdots \qquad (III)$$

[in Formula (III), $R^a$ and $R^b$ each represent a hydrocarbon group having 1 to 15 carbon atoms and may be the same as or different from each other, X represents a halogen atom, and m, n, p, and q are values that satisfy the relationship of $m + n + p + q = 3$ and that satisfy the following relationships, respectively: $0 < m \leq 3$, $\leq n < 3$, $0 \leq p < 3$, and $0 \leq q < 3$.]

$$M^aAlR^a_4\cdots \qquad (IV)$$

[In Formula (IV), $M^a$ represents Li, Na, or K, and $R^a$ represents a hydrocarbon group having 1 to 15 carbon atoms.]

$$R^a_rM^bR^b_sX_t\cdots \qquad (V)$$

[In Formula (V), $R^a$ and $R^b$ each represent a hydrocarbon group having 1 to 15 carbon atoms and may be the same as or different from each other, $M^b$ represents Mg, Zn, or Cd, X represents a halogen atom, and r, s, t satisfy the relationship of $r + s + t = 2$ and the following relationships, respectively: $0 < r \leq 2$, $0 \leq s \leq 1$, and $0 \leq t \leq 1$.]

(c-2) an organoaluminum oxy-compound

(c-3) a compound which reacts with the components (A) and (B) to form an ion pair

Among organometallic compounds (c-1) represented by Formulae (III), (IV), and (V), an organometallic compound represented by Formula (III) is preferred, and specific examples thereof include trialkylaluminums such as trimethylaluminum, triethylaluminum, triisopropylaluminum, triisobutylaluminum, trihexylaluminum, and trisoctylaluminum;

and alkylaluminum hydrides such as dimethylaluminum hydride, diethylaluminum hydride, diisopropylaluminum hydride, di-n-butylaluminum hydride, diisobutylaluminium hydride, and diisohexylaluminum hydride. These compounds may be used solely or in combination.

The organoaluminum oxy-compound (c-2) is preferably organoaluminum oxy-compounds synthesized from trialkylaluminum or tricycloalkylaluminum, and especially preferably aluminoxanes synthesized from trimethylaluminum or triisobutylaluminum. Such organoaluminum oxy-compounds may be used solely or in combination.

Non-limiting examples of the compound which reacts with the components (A) and (B) to form an ion pair (c-3) include Lewis acids, ionic compounds, borane compounds, and carborane compounds disclosed in Japanese Unexamined Patent Application Publication Nos. H1-501950, H1-502036, H3-179005, H3-179006, H3-207703, and H3-207704 and US 5321106; heteropoly compounds; and isopoly compounds.

Solid Support (S)

The solid support (S) which can be optionally used in the present invention is an inorganic or organic compound and is a granular or particulate solid.

Examples of the inorganic compound include porous oxides, inorganic chlorides, clay, clay minerals, and ion-exchange layered compounds, and porous oxides are preferred.

Examples of usable porous oxides include $SiO_2$, $Al_2O_3$, MgO, ZrO, $TiO_2$, $B_2O_3$, CaO, ZnO, BaO, and $ThO_2$ and composites and mixtures containing such oxides, in particular, natural or synthetic zeolites, $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO. Among these, materials primarily containing $SiO_2$ are preferred.

Although such porous oxides have different characteristics depending on the types and production process thereof, a preferred solid support used in the present invention has the following characteristics: a particle size that is typically in the range of 0.2 to 300 $\mu$m, and preferably 1 to 200 $\mu$m, a specific surface area that is typically in the range of 50 to 1200 $m^2/g$, and preferably 100 to 1000 $m^2/g$, and a pore volume that is typically in the range of 0.3 to 30 $cm^3/g$. Such a support is optionally calcined at, for example, 100 to 1000°C, and preferably 150 to 700°C.

Component (G)

The component (G) which can be optionally used in the present invention is at least one compound selected from the group consisting of the following compounds (g-1) to (g-6).

(g-1) Polyalkylene oxide block,
(g-2) Higher aliphatic amide,
(g-3) Polyalkylene oxide,
(g-4) Polyalkylene oxide alkylether,
(g-5) Alkyldiethanolamine, and
(g-6) Polyoxyalkylene alkylamine

In the present invention, in order to reduce fouling in a reactor or to improve the characteristics of produced polymer particles, such a component (G) can be present in the catalyst for producing the ethylene polymer ($\alpha$). Among the components (G), the components (g-1), (g-2), (g-3), and (g-4) are preferred, and the components (g-1) and (g-2) are especially preferred. An example of the component (g-2) is higher aliphatic diethanolamide.

Preparation Process of Catalyst for Producing Ethylene Polymer ($\alpha$)

A preparation process of the catalyst for producing the ethylene polymer ($\alpha$) used in the present invention will now be described.

The catalyst for producing the ethylene polymer ($\alpha$) can be prepared by adding the components (A), (B), and (C) to an inert hydrocarbon or to a polymerization system in which an inert hydrocarbon is used.

The components can be added in any order; however, preferred orders are, for example, as follows:

i) the components (A) and (B) are mixed and brought into contact with each other, the component (C) is subsequently brought into contact therewith, and then the product is added to a polymerization system;
ii) the components (A) and (C) are mixed and brought into contact with each other, the components (B) and (C) are mixed and brought into contact with each other, and these contact products are added to a polymerization system; and
iii) the components (A), (B), and (C) are successively added to a polymerization system.

In the case where the solid support (S) is used, at least one of the components (A), (B), and (C) can be brought into contact with the solid support (S) in an inert hydrocarbon to give a solid catalyst component (X). The components can be brought into contact with each other in any order; however, preferred orders are, for example, as follows:

iv) the component (C) is brought into contact with the solid support (S), and then the components (A) and (B) are brought into contact therewith, thereby giving the solid catalyst component (X);
v) the components (A), (B), and (C) are mixed and brought into contact with each other and then brought into contact with the solid support (S), thereby giving the solid catalyst component (X); and
vi) the component (C) is brought into contact with the solid support (S), the component (A) is subsequently brought into contact therewith to give a solid catalyst component (X1), the component (C) is brought into contact with the solid support (S), the component (B) is brought into contact therewith to give a solid catalyst component (X2), and these solid catalyst components (X1) and (X2) are used.

The order iv) is more preferred.
Specific examples of the inert hydrocarbon include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; halogenated hydrocarbons such as ethylene chloride, chlorobenzene, and dichloromethane; and mixtures thereof.
The contact time of the component (C) with the solid support (S) is typically in the range of 0 to 20 hours, and preferably 0 to 10 hours; and the contact temperature thereof is typically in the range of -50 to 200°C, and preferably -20 to 120°C. The molar ratio of the component (C) to the solid support (S) in the contact (component (C)/solid support (S)) is typically in the range of 0.2 to 2.0, and particularly preferably 0.4 to 2.0.
The contact time of the product, which has been formed by the contact of the component (C) with the solid support (S), with the components (A) and (B) are typically in the range of 0 to 5 hours, and preferably 0 to 2 hours; the contact temperature thereof is typically in the range of -50 to 200°C, and preferably -50 to 100°C. The amounts of the components (A) and (B) to be brought into contact with each other largely depend on the type and amount of the component (C). In the case where the component (c-1) is used, the amounts of the components (A) and (B) are adjusted such that the molar ratio [(c-1)/M] of the component (c-1) to all of the transition metal atoms (M) contained in the components (A) and (B) is typically in the range of 0.01 to 100000, and preferably 0.05 to 50000; in the case where the component (c-2) is used, the amounts of the components (A) and (B) are adjusted such that the molar ratio [(c-2)/M] of the aluminum atoms contained in the component (c-2) to all of the transition metal atoms (M) contained in the components (A) and (B) is typically in the range of 10 to 500000, and preferably 20 to 100000; and in the case where the component (c-3) is used, the amounts of the components (A) and (B) are adjusted such that the molar ratio [(c-3)/M] of the component (c-3) to all of the transition metal atoms (M) contained in the components (A) and (B) is typically in the range of 1 to 10, and preferably 1 to 5. The ratio of the component (C) to all of the transition metal atoms (M) contained in the components (A) and (B) can be obtained by inductively coupled plasma (ICP) atomic emission spectroscopy.
The ratio of the amount of the component (A) to the amount of the component (B) can be appropriately determined on the basis of the molecular weight and molecular weight distribution of the ethylene polymer; in a preferred range thereof, a ratio of a polymer derived from the component (A) to a polymer derived from the component (B) (hereinafter also referred to as "product ratio of polymers derived from the components (A) and (B)") [= the amount of a polymer derived from the component (A)/the amount of a polymer derived from the component (B)] is typically in the range of 40/60 to 95/5, preferably 50/50 to 95/5, and more preferably 60/40 to 95/5.
Calculation of the product ratio of polymers derived from the components (A) and (B) will now be described.
The molecular weight distribution curve of the ethylene polymer ($\alpha$), which can be obtained by GPC analysis, substantially has three peaks. Among these three peaks, the peak positioned on the lowest-molecular-weight side is the peak attributed to a polymer derived from the component (A), the second peak is the peak attributed to a polymer derived from the component (B), and the third peak, which is positioned on the highest-molecular-weight side, is the peak which appears only when both the components (A) and (B) are used. The ratio of the peak attributed to a polymer derived from the component (A) (namely, the above-mentioned peak on the lowest-molecular-weight side) to the peak attributed to a polymer derived from the component (B) (namely, the above-mentioned second peak) [= the peak attributed to a polymer derived from the component (A)/the peak attributed to a polymer derived from the component (B)] is defined as the product ratio of polymers derived from the components (A) and (B) [= the amount of a polymer derived from the component (A)/the amount of a polymer derived from the component (B)].
The ratio between the peaks is determined by the method which will be described below and in which the following molecular weight distribution curves are used:

a molecular weight distribution curve (G1) of the ethylene polymer ($\alpha$);
a molecular weight distribution curve (G2) of an ethylene polymer produced through polymerization under the same

conditions as in production of the ethylene polymer (α) except that a catalyst containing the components (A) and (C) and the solid support (S) (namely, a catalyst not containing the component (B)) is used; and

a molecular weight distribution curve (G3) of an ethylene polymer produced through polymerization under the same conditions as in production of the ethylene polymer (α) except that a catalyst containing the components (B) and (C) and the solid support (S) (namely, a catalyst not containing the component (A)) is used. The term "molecular weight distribution curve" herein refers to a differential molecular weight distribution curve unless otherwise specified, and the term "area" mentioned with respect to a molecular weight distribution curve herein refers to the area of a region formed between the molecular weight distribution curve and the base line.

[1] In numerical data of each of the molecular weight distribution curves (G1), (G2), and (G3), Log (molecular weight) is divided into 0.02 units, and the intensity [dwt/d(log molecular weight)] in each of the molecular weight distribution curves (G1), (G2), and (G3) is normalized such that the area would be 1.

[2] A composite curve (G4) is formed from the molecular weight distribution curves (G2) and (G3). In this case, the intensity in each molecular weight unit in the molecular weight distribution curves (G2) and (G3) is properly changed in a certain proportion such that the absolute value of the difference in the intensity in each molecular weight unit between the molecular weight distribution curve (G1) and the composite curve (G4) is approximately not more than 0.0005. Since the absolute value of the difference in the intensity between the molecular weight distribution curve (G1) and the composite curve (G4) is greater than 0.0005 on the high-molecular-weight side owing to an effect of the generated third peak, the intensity in the molecular weight distribution curves (G2) and (G3) is changed such that the absolute value of the difference in the intensity between the molecular weight distribution curve (G1) and the composite curve (G4) is approximately not more than 0.0005 on the lower-molecular-weight side.

[3] Assuming that the molecular weight at the largest weight fraction in the molecular weight distribution curve (G1) is determined as the peak top; part of the molecular weight distribution curve (G1) which does not overlap the composite curve (G4) on the higher-molecular-weight side relative to the peak top, namely, a peak (P5)[(G1)-(G4)] which appears on the higher-molecular-weight side from the molecular weight at the largest weight fraction in the molecular weight distribution curve (G1) in a difference curve (G5), which is generated as a difference curve between the molecular weight distribution curve (G1) and the composite curve (G4), is defined as a third peak (namely, the above-mentioned "third peak").

[4] A percentage Wa of the peak attributed to a polymer derived from the component (A) and a percentage Wb of the peak attributed to a polymer derived from the component (B) are calculated as follows.

$$Wa = S(G2)/S(G4)$$

$$Wb = S(G3)/S(G4)$$

S(G2) and S(G3) are the areas of the molecular weight distribution curves (G2) and (G3) after the changes in intensity, respectively, and S(G4) is the area of the composite curve (G4).

If the composite curve (G4) is obtained by multiplying the intensity of the molecular weight distribution curve (G2) by x, multiplying the intensity of the molecular weight distribution curve (G3) by y, and adding the products to each other, for example, since the initial area of each of the molecular weight distribution curves (G2) and (G3) has been normalized to 1 as described in [1], S(G2), S(G3), and S(G4) are x, y, (x + y), respectively. Hence, the Wa and Wb can be represented as follows with use of x and y.

$$Wa = x/(x + y)$$

$$Wb = y/(x + y)$$

Long-chain branching is effectively generated when the amount of a polymer derived from the component (A) is large, and the molar ratio of the component (A) to the component (B) on a transition metal compound basis can be appropriately determined provided that polymers derived therefrom satisfy the above-mentioned range.

In the production of the ethylene polymer (α), although the above-mentioned solid catalyst component (X) can be directly used, the solid catalyst component (X) can be preliminarily polymerized with olefin into a pre-polymerized catalyst component (XP) and then used.

The pre-polymerized catalyst component (XP) can be prepared by introducing olefin in the presence of the solid catalyst component (X) typically in an inert hydrocarbon solvent, and the preparation can be carried out through batch, semi-continuous, or continuous polymerization under reduced or normal pressure or application of pressure. Through this preliminary polymerization, a polymer is produced in an amount that is typically in the range of 0.01 to 1000 g, preferably 0.1 to 800 g, and more preferably 0.2 to 500 g per gram of the solid catalyst component (X).

After the pre-polymerized catalyst component prepared in the inert hydrocarbon solvent is separated from a suspension, the pre-polymerized catalyst component may be then resuspended in an inert hydrocarbon and olefin may be introduced into the resulting suspension. Alternatively, the pre-polymerized catalyst component may be dried, and then olefin may be introduced.

In the preliminary polymerization, the preliminary polymerization temperature is typically in the range of -20 to 80°C, and preferably 0 to 60°C, and the preliminary polymerization time is typically in the range of 0.5 to 100 hours, and preferably 1 to 50 hours.

The solid catalyst component (X) prepared in any of the above-mentioned manners can be used in the preliminary polymerization without limitation. The component (C) can be optionally used; in particular, an organoaluminum compound represented by Formula (III) of the component (c-1) can be properly used. In the use of the component (C), the component (C) is used such that a molar ratio of the aluminum atom (Al-C) contained in the component (C) to the transition metal compound (component (C)/transition metal compound) is typically in the range of 0.1 to 10000, and preferably 0.5 to 5000.

The concentration of the solid catalyst component (X) in a preliminary polymerization system is normally in the range of 1 to 1000 g/L, and preferably 10 to 500 g/L in terms of a ratio of the solid catalyst component (X)/polymerization volume of a liter.

The component (G) may be used in any step in the preparation of the catalyst for producing the ethylene polymer (α) and may be brought into contact in any order. The component (G) may be brought into contact with the pre-polymerized catalyst component (XP) produced through the preliminary polymerization.

In use of the catalyst for producing the ethylene polymer (α) for polymerization of ethylene or polymerization of ethylene with an α-olefin having 4 to 20 carbon atoms, each of the components (A) and (B) is used in an amount of typically $10^{-12}$ to $10^{-1}$ moles, and preferably $10^{-8}$ to $10^{-2}$ moles per liter of a reaction volume.

The polymerization temperature is typically in the range of -50 to 200°C, preferably 0 to 170°C, and especially preferably 60 to 170°C. The polymerization pressure is typically in the range of normal pressure to 100 kgf/cm$^2$, and preferably normal pressure to 50 kgf/cm$^2$. The polymerization reaction may be batch, semi-continuous, or continuous polymerization. The polymerization may be carried out in two stages in which the reaction conditions are different from each other.

The molecular weight of the ethylene polymer (α) to be produced can be adjusted by allowing hydrogen to be present in a polymerization system or changing the polymerization temperature. Furthermore, the component (G) can be present in a polymerization system to reduce fouling or improve particle characteristics.

In order to reduce a variation in physical properties, the ethylene polymer (α) particles produced through a polymerization reaction and other components to be optionally added are melted by any technique and subjected to kneading, granulation, and another process.

<Production Process of Ethylene Polymer (β)>

The ethylene polymer (β) used in the present invention can be produced through polymerization of ethylene and an α-olefin having 4 to 10 carbon atoms, and any polymerization catalyst and polymerization condition can be employed provided that a polymer that satisfies the above-mentioned requirements can be produced. Commercially available products, such as a linear low-density polyethylene, an ethylene-α-olefin copolymer, and a high-density polyethylene, can be used as the ethylene polymer (β). Specific examples thereof include LLDPE Evolue (registered trademark) and ULTZEX (registered trademark) manufactured by Prime Polymer Co., Ltd, and grades that satisfy the above-mentioned requirements can be selected.

<Production Process of Ethylene Polymer Composition (γ) >

The ethylene polymer composition (γ) can be produced by melt-kneading the ethylene polymer (α) and the ethylene polymer (β) or by granulating the ethylene polymer (α) into pellets and dry-blending the pellets with pellets of the ethylene polymer (β). A production process involving melt-kneading can be preferably employed; in this case, a continuous extruder and a closed kneader can be used. Examples thereof include machines such as a single screw extruder, a twin screw extruder, a mixing roll, a Banbury mixer, and a kneader. Among these, for example, in terms of economic efficiency and process efficiency, a single screw extruder and/or a twin screw extruder are preferably employed.

In the above-mentioned melt-kneading and dry-blending, the above-mentioned "another thermoplastic resin" can be used in addition to the ethylene polymer (α) and the ethylene polymer (β). In addition to or in place of the "another

thermoplastic resin", the above-mentioned "other components" can be also used.

The "another thermoplastic resin" and "other components" can be added in any order. For example, the "another thermoplastic resin" and "other components" may be simultaneously blended with either or both of the ethylene polymer ($\alpha$) and the ethylene polymer ($\beta$) or may be added after kneading of the ethylene polymer ($\alpha$) and the ethylene polymer ($\beta$).

<Shaped Article, Film, and Multilayer Film>

The ethylene polymer composition ($\gamma$) according to the present invention is processed into a shaped article, preferably a film and a multilayer film, having an excellent formability and mechanical strength.
The multilayer film has at least one surface layer that is a layer formed of the ethylene polymer composition ($\gamma$). The multilayer film may have such a layer formed of the ethylene polymer composition ($\gamma$) on one side alone or both sides thereof. A substrate used for forming the multilayer film may be formed of the ethylene polymer composition ($\gamma$) or a material other than the ethylene polymer composition ($\gamma$).

Each of the above-mentioned film and multilayer film has an excellent blocking resistance without use of an antiblocking agent.

The ethylene polymer composition ($\gamma$) of the present invention is processed by general film forming, sheet molding, blow molding, injection molding, and extrusion molding. Examples of the film forming include extrusion lamination, film formation with a T-die, and inflation molding (air cooling, water cooling, multistage cooling, and fast processing). The produced film may have a monolayer structure; however, when it is a film having a multilayer structure, it can further have a variety of functions. An example of a technique for forming such a film is co-extrusion among the above-mentioned forming techniques. Lamination techniques such as extrusion lamination and dry lamination enable lamination on a material unsuitable for co-extrusion, such as paper and a barrier film (aluminum foil, deposited film, or a coated film). In other words, in order to produce a multilayer film having at least one surface layer that is a layer formed of the ethylene polymer composition ($\gamma$), such techniques can be employed as techniques for laminating a layer of the ethylene polymer composition ($\gamma$) on a substrate.

A multilayer structure can be formed by co-extrusion in blow molding, injection molding, and extrusion molding as well as in the film forming to produce a highly functional product.

Examples of the shaped article produced by processing the ethylene polymer composition ($\gamma$) of the present invention include injection-molded products such as films, sheets, blown infusion solution bags, blown bottles, gasoline tanks, tubes formed by extrusion molding, pipes, tearing-off caps, and household articles; fibers; and large molded products obtained by rotational molding.

Examples of the film suitably produced by processing the ethylene polymer composition ($\gamma$) of the present invention include a variety of wrapping films such as beverage liquid-product-packaging bags, liquid soup wrappers, liquid paper containers, laminated fabrics, specific-shaped liquid product packaging bags (e.g., standing pouches), standard bags, heavy-duty sacks, wrap films, sugar packages, oily food packages, and food packages; protect films; infusion solution bags; agricultural materials; bags held in boxes; and clean films used for wrapping semiconductor materials, medicines, and foods. In this case, the film may be a film having a structure in which at least one layer is formed of the ethylene polymer composition ($\gamma$) or may be a film having a multilayer structure in which a layer of the ethylene polymer composition ($\gamma$) is laminated on a substrate formed of, for instance, nylon, polyester, or polyolefin film.

## EXAMPLES

The present invention will now be described further in detail with reference to Examples but is not limited thereto.

[Analysis of Ethylene Polymer]

The physical properties of an ethylene polymer were measured as follows.

<Melt Flow Rate (MFR)>

Measurement was carried out at 190°C under a load of 2.16 kg (kgf) in accordance with ASTM D 1238-89.

<Density (D)>

In accordance with JIS K 7112, a strand obtained in the measurement of MFR was heated at 100°C for an hour and then left to stand at room temperature for an hour, and the measurement was carried out by a density-gradient tube method.

<Melt Tension (MT)>

Melt tension at 190°C (MT) (unit: g) was determined through measurement of stress in drawing at a constant rate. In the measurement, a capillary rheometer CAPILOGRAPH 1B manufactured by Toyo Seiki Seisaku-sho, Ltd. was used. The conditions in the measurement were as follows: a resin temperature of 190°C, a melting time of 6 minutes, a barrel diameter of 9.55 mmφ, an extrusion rate of 15 mm/min, a winding speed of 24 m/min (in the case where a molten filament was broken, the winding speed was decreased by 5 m/min), a nozzle diameter of 2.095 mmφ, and a nozzle length of 8 mm.

<Shear Viscosity (η*)>

Shear viscosity [η*(1.0)](P) at 200°C and an angular velocity of 1.0 rad/sec was measured as follows.

In order to define a shear viscosity (η*), the angular velocity [ω(rad/sec)] variance of shear viscosity at a measurement temperature of 200°C (η*) was measured in the range of $0.01 \leq \omega \leq 100$. A viscoelasticity measuring apparatus Physica MCR301 manufactured by Anton Paar GmbH was used in the measurement, a parallel plate having a size of 25 mmφ was used as a sample holder, and the thickness of a sample was approximately 2.0 mm. The measurement was carried out at five points per digit of ω. The strain amount was appropriately selected from the range of 3 to 10% so as to enable detection of torque in the measurement range and so as to avoid torque over.

The sample used in the measurement of shear viscosity was produced by press-forming with a press-forming machine manufactured by SHINTO Metal Industries Corporation under the following conditions so as to have a thickness of 2 mm: preheating temperature of 190°C, preheating time of 5 minutes, heating temperature of 190°C, heating time of 2 minutes, heating pressure of 100 $kgf/cm^2$, cooling temperature of 20°C, cooling time of 5 minutes, and cooling pressure of 100 $kgf/cm^2$.

<Number of Methyl Branches and Number of Ethyl Branches>

The number of methyl branches and the number of ethyl branches were obtained by analyzing a $^{13}C$-NMR spectrum with a nuclear magnetic resonance apparatus ECP500 (500 MHz) manufactured by JEOL Ltd.

Into a commercially available quartz glass tube used for NMR analysis and having a diameter of 10 mm, 250 to 400 mg of an ethylene polymer and 3 ml of a mixed solvent of o-dichlorobenzene (manufactured by Wako Pure Chemical Industries, Ltd., special grade) and deuterated benzene (manufactured by ISOTEC) (o-dichlorobenzene: deuterated benzene = 5:1 (v/v)) were put, and the content was heated at 120°C to uniformly disperse the sample.

Integration was carried out 10000 times to 30000 times.

Absorption in a NMR spectrum was assigned in accordance with Kagaku Ryouiki Zoukan vol. 141 NMR-Sousetsu to Jikken Guide [I]; p. 132 and 133. In particular, the number of methyl branches per 1000 carbon atoms constituting the polymer chain of an ethylene polymer was calculated from an integrated intensity ratio of absorption of methyl groups derived from the methyl branching (19.9 ppm) to the integral sum of absorption observed in the range of 5 to 45 ppm. The number of ethyl branches was calculated from an integrated intensity ratio of absorption of ethyl groups derived from the ethyl branching (10.8 ppm) to the integral sum of absorption observed in the range of 5 to 45 ppm.

The peak of the main chain methylene (29.97 ppm) was employed as the chemical shift reference.

<Zero Shear Viscosity ($\eta_0$)>

Zero shear viscosity ($\eta_0$)(P) at 200°C was determined as follows.

The angular velocity ω(rad/sec) variance of shear viscosity (η*) was measured at a measurement temperature of 200°C in the range of $0.01 \leq \omega \leq 100$. A viscoelasticity measuring apparatus Physica MCR301 manufactured by Anton Paar GmbH was used in the measurement, a parallel plate having a size of 25 mmφ was used as a sample holder, and the thickness of a sample was approximately 2.0 mm. The measurement was carried out at five points per digit of ω. The strain amount was appropriately selected from the range of 3 to 10% so as to enable detection of torque in the measurement range and so as to avoid torque over.

The sample used in the measurement of shear viscosity was produced by press-forming with a press-forming machine manufactured by SHINTO Metal Industries Corporation under the following conditions so as to have a thickness of 2 mm: preheating temperature of 190°C, preheating time of 5 minutes, heating temperature of 190°C, heating time of 2 minutes, heating pressure of 100 $kgf/cm^2$, cooling temperature of 20°C, cooling time of 5 minutes, and cooling pressure of 100 $kgf/cm^2$.

Zero shear viscosity ($\eta_0$) was calculated by fitting the Carreau model represented by Equation (Eq-3) to an actually obtained rheological curve [angular velocity (ω) variance of shear viscosity (η*)] by a nonlinear least-squares method.

$$\eta^* = \eta_0[1 + (\lambda\omega)^a]^{(n-1)/a} \quad (Eq\text{-}3)$$

$\lambda$ represents a parameter with a dimension of time, and n represents a power law index of a material. The fitting by a nonlinear least-squares method was carried out such that d in Equation (Eq-4) was minimized.
[Math. 2]

$$d = \sum_{\omega=0.02512}^{100} \left[Log_{10}\eta_{\exp}(\omega) - Log_{10}\eta_{calc}(\omega)\right]^2 \quad \cdots (Eq-4)$$

In Equation (Eq-4), $\eta_{exp}(\omega)$ represents actually measured shear viscosity, and $\eta_{calc}(\omega)$ represents shear viscosity calculated from the Carreau model.

<Number Average Molecular Weight (Mn), Weight Average Molecular Weight (Mw), Z Average Molecular Weight (Mz), Molecular Weight Distribution (Mw/Mn and Mz/Mw)>

Measurement was carried out as follows with a GPC-viscometer (GPC-VISCO) GPC/V2000 manufactured by Waters Corporation.
A guard column used was a Shodex AT-G, analytical columns used were two AT-806 columns, and detectors used were a differential refractometer and a three-capillary viscometer. A column temperature was 145°C, a mobile phase used was o-dichlorobenzene containing 0.3 weight% of BHT as an antioxidant, a flow rate was 1.0 ml/min, and a sample concentration was 0.1 weight%. Standard polystyrene used was manufactured by TOSOH CORPORATION. In calculation of molecular weight, an actual viscosity was calculated with the viscometer and the refractometer, and a number average molecular weight (Mn), a weight average molecular weight (Mw), a Z average molecular weight (Mz), and a molecular weight distribution (Mw/Mn and Mz/Mw) were obtained by universal calibration based on the actual viscosity.

<Molecular Weight Distribution Curve>

A molecular weight distribution curve was obtained with a gel permeation chromatograph alliance GPC2000 (high-temperature size exclusion chromatograph) manufactured by Waters Corporation under the following conditions.
Analysis software: chromatography data system Empower (Waters Corporation)
Column: TSKgel $GMH_6$-HT $\times$ 2 and TSKgel $GMH_6$-HTL $\times$ 2
(inner diameter: 7.5 mm and length: 30 cm, manufactured by TOSOH CORPORATION)
Mobile phase: o-dichlorobenzene (manufactured by Wako Pure Chemical Industries, Ltd., special grade chemical)
Detector: differential refractometer (embedded in the apparatus)
Column temperature: 140°C
Flow rate: 1.0 mL/min
Feed: 500 $\mu$L
Sampling time interval: one second
Sample concentration: 0.15% (w/v)
Molecular weight calibration: monodisperse polystyrene (manufactured by TOSOH CORPORATION)/molecular weight of 495 to 20600000

A molecular weight distribution curve was formed in terms of the molecular weight of standard polyethylene on the basis of procedures of general calibration described in Z. Crubisic; P. Rempp; H. Benoit, J. Polym. Sci., B5, 1967, 753. A ratio of polymer derived from the component (A) to a polymer derived from the component (B) and the molecular weight at the largest weight fraction (peak top M) were calculated from this molecular weight distribution curve.

<Intrinsic viscosity [$\eta$]>

Approximately 20 mg of a measurement sample was dissolved in 15 ml of decalin, and the specific viscosity

$\eta_{sp}$ was measured in an oil bath at 135°C. Then, 5 ml of a decalin solvent was further added to the decalin solution for dilution, and the specific viscosity $\eta_{sp}$ thereof was measured in the same manner. This dilution was further repeated twice, and the value of $\eta_{sp}$/C obtained by extrapolating concentration (C) to 0 as specified in Equation (Eq-6) was determined as the intrinsic viscosity [η] (unit: dl/g)

$$[\eta] = \lim(\eta_{sp}/C)\ (C\rightarrow 0)\ \text{--------}\ (Eq\text{-}6)$$

[Inflation Molding of Ethylene Polymer Composition and Analysis of Film]

<Molding Process and Bubble Stability>

Pellets of an ethylene polymer composition were subjected to air-cooling inflation molding under the following conditions to form a film having a thickness of 40 μm and a width of 320 mm.
Molding Machine: 50-mmφ inflation molding machine manufactured by Modern Machinery Co. Ltd.

Screw: barrier screw
Dice: 100 mmφ (diameter) and 2.0 mm (lip width)
Air ring: 2 gap type
Molding temperature: 190°C
Extrusion rate: 28.8 Kg/h
Drawing rate: 20 m/min

A bubble was visually observed during the film formation by inflation molding and evaluated as follows:

a) highly stable bubble with no movement, evaluation A;
b) stable bubble with little movement, evaluation B;
c) slightly unstable bubble with movement, evaluation C; and
d) unstable bubble with significant movement, evaluation D.

The formability is better and more preferable as the evaluation criteria shifts from D to A.

<Dart Impact Strength>

Measurement was carried out as follows in accordance with ASTM D 1709.
A specimen was fastened by a technique involving use of a pneumatic clamp, a dart having a semispherical shape was dropped from a certain height onto the specimen, and a load that enabled 50% of the specimen to be broken was read from a graph. The dart was dropped 10 times from one height, and Dart A Test was employed.

<External Haze>

External haze was calculated from the following equation.

$$\text{External haze} = \text{total haze} - \text{inner haze}$$

Total haze was measured in accordance with ASTM D 1003. A film was put into a cell filled with cyclohexanol, and then internal haze was measured with a haze meter as in measurement of the total haze.

<Blocking Coefficient>

Measurement was carried out as follows in accordance with ASTM D 1893-67.
The inner surfaces of two inflation films were attached to each other to form a specimen, and the specimen was aged for a predetermined time under heat and load and then fixed to a blocking-measuring jig attached to an Instron type universal tester. The force required for separating the two films of the blocked specimen with the Instron type universal tester was divided by the width of the specimen, and the obtained value was determined as a blocking coefficient.
Measurement temperature: 23°C
Test rate: 200 mm/min
Specimen: thickness/width: 40 μm/200 mm
Aging condition: 50°C × 10 kgf × 3 days

<Surface Roughness>

An atomic force microscope (Nanoscale Hybrid Microscope VN8010 manufactured by Keyence Corporation) was used to measure 10-point-average surface roughness Rz under the following conditions. The outer surface of an inflation film was subjected to the measurement, and Rz was measured in both a direction in which the film was drawn (MD) and a direction orthogonal to the MD direction (TD).
Cantilever: DFM/SS-mode cantilever OP-75041
Scan range: 50 μm
Aspect ratio: 1:1
Angle: 0 degree
Scan sensitivity: automatic
Temperature: 25°C

[Production Example 1: Ethylene Polymer (α-1)]

Preparation of Solid Catalyst Component (X-1)

In a reactor having an inner volume of 270 liters and equipped with a stirrer, under a nitrogen atmosphere, 10 kg of a solid support (S) which was silica manufactured by Fuji Silysia chemical Ltd. ($SiO_2$: average particle size of 70 μm, specific surface area of 340 $m^2$/g, pore volume of 1.3 $cm^3$/g, and calcined at 250°C) was suspended in 77 liters of toluene, and then the resultant mixture was cooled to 0 to 5°C. To this suspension, 19.4 liters of a component (C) which was a solution of methylaluminoxane in toluene (3.5 mmol/mL on an Al atom basis) was added dropwise over for 30 minutes. In this step, the temperature inside the system was maintained at 0 to 5°C. The reaction was continued at 0 to 5°C for 30 minutes, the temperature was increased to 95 to 100°C over approximately 1.5 hours, and the reaction was performed at 95 to 100°C for 4 hours. Then, the temperature was decreased to normal temperature, the supernatant liquid was removed by decantation, and then washing with toluene was carried out twice to give 115 liters of toluene slurry in total. Part of the obtained slurry component was collected for analysis of concentration, and result of the analysis showed that the slurry concentration was 122.6 g/L and that the Al concentration was 0.62 mol/L.
Into a reactor having an inner volume of 114 liters and equipped with a stirrer, 12.2 liters of the slurry was put under a nitrogen atmosphere, and toluene was added thereto to adjust the total volume to be 28 liters. Then, 2.58 g of a component (A) which was dimethylsilylene(3-n-butylcyclopentadienyl)(cyclopentadienyl)zirconium dichloride (6.61 mmol on a Zr atom basis) and 16.40 g of a component (B) which was isopropylidene(cyclopentadienyl)(2,7-di-t-butyl-9-fluorenyl)zirconium dichloride (30.10 mmol on a Zr atom basis) were placed in a five-liter glass reactor under a nitrogen atmosphere (a molar ratio of component (A) to component (B) was 18/82), dissolved in 5.0 liters of toluene, and then transferred to the above-mentioned reactor under pressure. After the transfer, reaction was performed at an internal temperature of 73 to 76°C for 2 hours, the supernatant liquid was removed by decantation, washing with hexane was subsequently carried out three times, and then hexane was added thereto to adjust the total volume to be 30 liters, thereby giving hexane slurry of a solid catalyst component (X-1).

Preparation of Pre-polymerized Catalyst Component (XP-1)

Then, the hexane slurry of the solid catalyst component (X-1) was cooled to 10°C, and 3.7 mol of diisobutylaluminum hydride (DiBAl-H) was added thereto. Under normal pressure, ethylene was continuously fed into the system for several minutes. The temperature inside the system was maintained at 10 to 15°C in this step, and then 0.10 liters of 1-hexene was added thereto. After the addition of 1-hexene, feeding of ethylene was started at 1.4 kg/h, and preliminary polymerization was induced at 32 to 37°C inside the system. Then, after the preliminary polymerization had been started, 0.06 liters of 1-hexene was added every 30 minutes, and the addition of 1-hexane was performed five times in total. After a lapse of 190 minutes from the start of the preliminary polymerization when the quantity of fed ethylene reached 4.3 kg, the feeding of ethylene was stopped. Then, the supernatant liquid was removed by decantation, washing with hexane was carried out four times, and hexane was added to the product to adjust the total volume to be 50 liters.
Then, a component (G) which was a hexane solution of CHEMISTAT 2500 (coconut fatty acid diethanolamide:

60.8 g) manufactured by Sanyo Chemical Industries, Ltd. was transferred to the above-mentioned reactor under pressure at 34 to 36°C inside the system, and the reaction was performed at 34 to 36°C for 2 hours. Then, the supernatant liquid was removed by decantation, and washing with hexane was carried out four times.

Under a nitrogen atmosphere, the hexane slurry was put into an evaporator having an inner volume of 43 liters and equipped with a stirrer, the pressure inside the evaporator was reduced to -68 kPaG over approximately 60 minutes, and vacuum drying was carried out for approximately 4.3 hours after the pressure reached -68 kPaG, thereby removing hexane and volatile content in the pre-polymerized catalyst component. The pressure was further reduced to -100 kPaG, and vacuum drying was carried out for approximately 8 hours after the pressure reached -100 kPaG, thereby giving 6.1 kg of a pre-polymerized catalyst component (XP-1). Part of the pre-polymerized catalyst component was collected to analyze the composition thereof, and result of the analysis showed that the Zr atom content per gram of the pre-polymerized catalyst component was 0.52 mg.

Production of Ethylene Polymer ($\alpha$-1)

In a fluidized bed gas phase polymerization reactor having an inner volume of 1.7 $m^3$, the pre-polymerized catalyst component (XP-1) was used to produce an ethylene/1-hexene copolymer.

Under conditions shown in Table 1, the pre-polymerized catalyst component (XP-1), ethylene, nitrogen, 1-hexane, and another material were continuously fed into the reactor. The polymerization reactant was continuously extracted from the reactor and dried with a drier to yield ethylene polymer ($\alpha$-1) powder.

To the ethylene polymer ($\alpha$-1) powder were added thermal stabilizers which were 850 ppm of SUMILIZER GP (manufactured by Sumitomo Chemical Company, Limited) and 210 ppm of calcium stearate (manufactured by Nitto Chemical Industry Co., Ltd.), and the resultant mixture was melt-kneaded with a 20-mm$\varphi$ counter-rotation twin screw extruder (manufactured by Toyo Seiki Seisaku-sho, Ltd.) under conditions of a predetermined temperature of 200°C and a screw rotation speed of 100 rpm, extruded in the form of a strand, and then cut into pellets of the ethylene polymer ($\alpha$-1). The pellets were used as a measurement sample to measure the physical properties thereof. Table 2 shows results of the measurement.

[Production Example 2: Ethylene Polymer ($\alpha$-2)]

Preparation of Solid Catalyst Component (X-2)

Except that the molar ratio (A)/(B) of the component (A) to the component (B) in the preparation of the solid catalyst component (X-1) in Production Example 1 was changed to 20/80, hexane slurry of a solid catalyst component (X-2) was prepared as in the preparation of the solid catalyst component (X-1).

Preparation of Pre-polymerized Catalyst Component (XP-2)

Except that the solid catalyst component (X-1) used in the preparation of the pre-polymerized catalyst component (XP-1) was changed to the solid catalyst component (X-2), a pre-polymerized catalyst component (XP-2) was produced as in the preparation of the pre-polymerized catalyst component (XP-1). The composition of the pre-polymerized catalyst component (XP-2) was analyzed, and result of the analysis showed that the Zr atom content per gram of the solid catalyst component was 0.54 mg.

Production of Ethylene Polymer ($\alpha$-2)

Except that the pre-polymerized catalyst component and polymerization conditions employed in the production of the ethylene polymer ($\alpha$-1) in Production Example 1 were changed as shown in Table 1, ethylene polymer ($\alpha$-2) powder was produced as in Production Example 1.

A measurement sample was formed of the ethylene polymer ($\alpha$-2) powder as in Production Example 1, and the physical properties thereof were measured. Table 2 shows results of the measurement.

[Production Example 3: Ethylene Polymer ($\alpha$-3)]

Preparation of Solid Catalyst Component (X-3)

Except that the molar ratio (A)/(B) of the component (A) to the component (B) in the preparation of the solid catalyst component (X-1) in Production Example 1 was changed to 19/81, hexane slurry of a solid catalyst component (X-3) was prepared as in the preparation of the solid catalyst component (X-1).

Preparation of Pre-polymerized Catalyst Component (XP-3)

Except that the solid catalyst component (X-1) used in the preparation of the pre-polymerized catalyst component (XP-1) was changed to the solid catalyst component (X-3), a pre-polymerized catalyst component (XP-3) was produced as in the preparation of the pre-polymerized catalyst component (XP-1). The composition of the pre-polymerized catalyst component (XP-3) was analyzed, and result of the analysis showed that the Zr atom content per gram of the solid catalyst component was 0.52 mg.

Production of Ethylene Polymer (α-3)

Except that the pre-polymerized catalyst component and polymerization conditions employed in the production of the ethylene polymer (α-1) in Production Example 1 were changed as shown in Table 1, ethylene polymer (α-3) powder was produced as in Production Example 1.
A measurement sample was formed of the ethylene polymer (α-3) powder as in Production Example 1, and the physical properties thereof were measured. Table 2 shows results of the measurement.

[Production Example 4: Ethylene Polymer (α-4)]

Production of Ethylene Polymer (α-4)

In the production of the ethylene polymer (α-1) in Production Example 1, the inner volume of the reactor was changed to 1.0 $m^3$, and the pre-polymerized catalyst component and polymerization conditions were changed as shown in Table 1. Except for these changes, ethylene polymer (α-4) powder was produced as in Production Example 1.
A measurement sample was formed of the ethylene polymer (α-4) powder as in Production Example 1, and the physical properties thereof were measured. Table 2 shows results of the measurement.

[Production Example 5: Ethylene Polymer (α-5)]

Production of Ethylene Polymer (α-5)

Except that the polymerization conditions employed in the production of the ethylene polymer (α-4) in Production Example 4 were changed as shown in Table 1, ethylene polymer (α-5) powder was produced as in Production Example 4.
A measurement sample was formed of the ethylene polymer (α-5) powder as in Production Example 1, and the physical properties thereof were measured. Table 2 shows results of the measurement.

[Production Example 6: Ethylene Polymer (α-6)]

Preparation of Solid Catalyst Component (X-4)

In the preparation of the solid catalyst component (X-1) in Production Example 1, the molar ratio (A)/(B) of the component (A) to the component (B) was changed to 14/86, and the reaction was performed for an hour at 20 to 25°C inside the reactor. Except for these changes, hexane slurry of a solid catalyst component (X-4) was prepared as in the preparation of the solid catalyst component (X-1).

Preparation of Pre-polymerized catalyst component (XP-4)

Then, the hexane slurry of the solid catalyst component (X-4) was heated to 38 to 40°C, and 3.7 mol of diisobutylaluminum hydride (DiBAl-H) was subsequently added thereto. Then, feeding of ethylene was started at 1.4 kg/h under normal pressure. The temperature inside the system was maintained at 38 to 40°C, and the feeding of ethylene was stopped after a lapse of 240 minutes from the start of the preliminary polymerization when the quantity of fed ethylene reached 4.3 kg. Then, the supernatant liquid was removed by decantation, washing with hexane was carried out four times, and hexane was added to the product to adjust the total volume to be 50 liters.
Then, a component (G) which was EMALGEN 108 manufactured by Kao Corporation (polyoxyethylene lauryl ether: 30.4 g) was transferred to the above-mentioned reactor under pressure at 38 to 40°C inside the system, and the reaction was performed at 38 to 40°C for 3 hours. Then, the supernatant liquid was removed by decantation, and washing with hexane was carried out four times.
Then, under a nitrogen atmosphere, the hexane slurry was put into an evaporator having an inner volume of 43 liters and equipped with a stirrer, pressure inside the evaporator was reduced to -68 kPaG over approximately 60

minutes, and vacuum drying was carried out for approximately 4.3 hours after the pressure reached -68 kPaG, thereby removing hexane and volatile content in the pre-polymerized catalyst component. The pressure was further reduced to -100 kPaG, and vacuum drying was carried out for approximately 8 hours after the pressure reached -100 kPaG, thereby giving 5.9 kg of the pre-polymerized catalyst component (XP-4). Part of the pre-polymerized catalyst component was collected to analyze the composition thereof, and result of the analysis showed that the Zr atom content per gram of the pre-polymerized catalyst component was 0.53 mg.

Production of Ethylene Polymer (α-6)

In the production of the ethylene polymer (α-1) in Production Example 1, the inner volume of the reactor was changed to 1.0 $m^3$, and the pre-polymerized catalyst component and polymerization conditions were changed as shown in Table 1. Except these changes, ethylene polymer (α-6) powder was produced as in Production Example 1.

A measurement sample was formed of the ethylene polymer (α-6) powder as in Production Example 1, and the physical properties thereof were measured. Table 2 shows results of the measurement.

[Ethylene Polymer (α-7)]

An ethylene/1-hexene copolymer commercially available from Prime Polymer Co., Ltd. (trade name: Evolue SP2040) was used. Pellets of the product were used as a measurement sample to measure the physical properties thereof, and Table 2 shows results of the measurement.

[Ethylene Polymer (α-8) and Ethylene Polymer (β-7)]

A polyethylene produced through high pressure radical polymerization and commercially available from DUPONT-MITSUI POLYCHEMICALS CO., LTD (trade name: MIRASON 14P) was used. Pellets of the product were used as a measurement sample to measure the physical properties thereof, and Tables 2 and 3 show results of the measurement.

[Table 1]

| Production of ethylene polymer (α) (Production Example:polymer) | | | Production Example 1: α-1 | Production Example 2: α-2 | Production Example 3: α-3 | Production Example 4: α-4 | Production Example 5: α-5 | Production Example 6: α-6 |
|---|---|---|---|---|---|---|---|---|
| Polymerization conditions | Pre-polymerized catalyst component | Number | XP-1 | XP-2 | XP-3 | XP-3 | XP-3 | XP-4 |
| | Component (A)/component (B) | Molar ratio | 18/82 | 20/80 | 19/81 | 19/81 | 19/81 | 14/86 |
| | Amount of catalyst | mmol-Zr/h | 0.045 | 0.024 | 0.024 | 0.025 | 0.025 | 0.027 |
| | Ethylene | $Nm^3/h$ | 7.0 | 9.3 | 10.8 | 5.9 | 4.4 | 7.1 |
| | 1-Hexene | kg/h | 0.50 | 0.80 | 0.80 | 0.88 | 0.40 | 0.57 |
| | Polymerization temperature | °C | 80 | 80 | 80 | 78 | 79 | 79 |
| | Polymerization pressure | MPa-G | 2.0 | 2.5 | 2.4 | 1.4 | 2.0 | 1.7 |
| | Ethylene partial pressure | MPa·A | 1.2 | 2.0 | 2.0 | 1.0 | 1.0 | 1.2 |
| | CHEMISTAT 2500 | g/h | 0.45 | 0.15 | 0.15 | 0.24 | 0.17 | 0.60 |
| | Linear gas velocity | m/sec | 0.60 | 0.75 | 0.70 | 0.70 | 0.70 | 0.80 |
| | Retention time | hr | 5.0 | 4.5 | 4.2 | 5.1 | 5.5 | 4.8 |
| | Vapor phase: hydrogen/ethylene ratio | m.r.($\times 10^{-4}$) | 30.5 | 24.7 | 30.1 | 15.3 | 25.6 | 30.3 |
| | Vapor phase: 1-hexene/ethylene ratio | m.r. | 0.0061 | 0.0079 | 0.0081 | 0.0083 | 0.0054 | 0.0068 |
| Polymer yield | | kg/h | 4.8 | 5.3 | 5.7 | 4.7 | 4.4 | 5.0 |
| Component (A)-derived polymer/component (B)-derived polymer | | Area ratio | 68/32 | 72/28 | 69/31 | 63/37 | 80/20 | 60/40 |

[Table 2]

| Ethylene polymer (α) | | | α-1 | α-2 | α-3 | α-4 | α-5 | α-6 | α-7 | α-8 |
|---|---|---|---|---|---|---|---|---|---|---|
| Comonomer species | | - | 1-hexene | 1-hexene | 1-hexene | 1-hexene | 1-hexene | 1-hexene | 1-hexane | - |
| MFR | | g/10 min. | 1.2 | 4.0 | 1.8 | 1.1 | 5.1 | 0.41 | 3.8 | 5.0 |
| D | | $kg/m^3$ | 920 | 918 | 918 | 911 | 927 | 918 | 920 | 919 |
| Sum of Me branch and Et branch A + B | | /1000 C | 0.4 | 0.3 | 0.4 | 0.5 | 0.3 | 0.5 | *1 | 8.1 |
| [η] | | dl/g | 1.51 | 1.25 | 1.37 | 1.56 | 1.40 | 1.75 | 1.53 | 1.14 |
| $\eta_0$ | | P | 783000 | 140000 | 451000 | 566000 | 126000 | 2550000 | 14300 | 32000 |
| GPC | Mn | - | 24400 | 21700 | 21500 | 24300 | 22600 | 25900 | 24800 | 20300 |
| | Mw | - | 159200 | 140400 | 139000 | 175000 | 159000 | 184000 | 72300 | 307000 |
| | Mz | - | 768000 | 772000 | 659000 | 877600 | 1130000 | 1010000 | 137000 | 2000000 |
| | Mw/Mn | - | 6.52 | 6.47 | 6.47 | 7.20 | 7.04 | 7.10 | 2.92 | 15.12 |
| | Mz/Mw | - | 4.82 | 5.50 | 4.74 | 5.01 | 7.11 | 5.49 | 1.89 | 6.51 |
| $(\eta_0/Mw^{6.8})\times10^{30}$ | | | 3.32 | 1.39 | 4.80 | 1.26 | 0.54 | 4.03 | 12.98 | 0.00 |
| $([\eta_0]/Mw^{0.776})\times10^4$ | | | 1.39 | 1.27 | 1.40 | 1.33 | 1.29 | 1.44 | 2.59 | 0.63 |
| MT | | g | 8.2 | 7.3 | 7.6 | 8.9 | 6.2 | 10.2 | 0.4 | 7.3 |
| η* | | P | 65000 | 28700 | 50600 | 58000 | 29800 | 100000 | 14300 | 28100 |
| $(MT/\eta^*)\times10^4$ | | g/P | 1.26 | 2.54 | 1.50 | 1.53 | 2.08 | 1.02 | 0.28 | 2.60 |
| peak top M | | - | $1.0\times10^{4.32}$ | $1.0\times10^{4.32}$ | $1.0\times10^{4.32}$ | $1.0\times10^{4.38}$ | $1.0\times10^{4.34}$ | $1.0\times10^{4.34}$ | $1.0\times10^{4.62}$ | $1.0\times10^{4.40}$ |
| *1 Detection limit (0.02/1000 C) or lower | | | | | | | | | | |

[Ethylene Polymer (β-1)]

An ethylene/1-hexene copolymer commercially available from Prime Polymer Co., Ltd. (trade name: Evolue SP1510) was used. Pellets of the product were used as a measurement sample to measure the physical properties thereof, and Table 3 shows results of the measurement.

[Ethylene Polymer (β-2)]

An ethylene/1-hexene copolymer commercially available from Prime Polymer Co., Ltd. (trade name: Evolue SP1520) was used. Pellets of the product were used as a measurement sample to measure the physical properties thereof, and Table 3 shows results of the measurement.

[Ethylene Polymer (β-3)]

An ethylene/1-hexene copolymer commercially available from Prime Polymer Co., Ltd. (trade name: Evolue SP1540) was used. Pellets of the product were used as a measurement sample to measure the physical properties thereof, and Table 3 shows results of the measurement.

[Ethylene Polymer (β-4)]

Dried n-hexane, a solution of di(p-tolyl)methylene(cyclopentadienyl)(octamethyloctahydrodibenzofluorenyl)zirconium dichloride in hexane (0.16 mmol/L), a solution of methylaluminoxane (MMAO-3A: Tosoh Finechem Corporation.) in toluene (80 mmol/L), and a solution of triisobutylaluminum in hexane (12 mmol/L) were introduced into a complete stirring-mixing-type continuous polymerization reactor having an inner volume of 1 L at rates of 5.5 L/h, 0.0104 mmol/h, 5.2 mmol/h, and 1.8 mmol/h, respectively. Hydrogen was not introduced. At the same time, ethylene and 1-octene were continuously fed into the polymerization reactor at rates of 480 g/h and 0.87 kg/h, respectively, the polymerization solution was continuously extracted from the upper portion of the polymerization reactor to adjust the reaction pressure inside the polymerization reactor to be 6.9 MPa, and polymerization reaction was performed at a polymerization temperature of 150°C. A small amount of isopropyl alcohol was added as an inactivator to the polymerization solution continuously extracted from the polymerization reactor, 500 ppm of a thermal stabilizer which was Irganox 1076 (manufactured by Ciba Specialty Chemicals) was added thereto, and then the product was flushed to atmospheric pressure to allow a polymer precipitated. The polymer was subsequently dried with a vacuum dryer under N2 flow at 120°C for 8 hours. In this polymerization, ethylene conversion was 87.1%, and an ethylene polymer yield was 0.546 kg/h.

The ethylene polymer was subjected to frost shattering, thermal stabilizers which were 850 ppm of SUMILIZER (registered trademark) GP (manufactured by Sumitomo Chemical Company, Limited) and 210 ppm of calcium stearate (manufactured by Nitto Chemical Industry Co., Ltd.) were added thereto, and the resultant mixture was melt-kneaded with a 20-mmφ counter-rotation twin screw extruder (manufactured by Toyo Seiki Seisaku-sho, Ltd.) under conditions of a predetermined temperature of 200°C and a screw rotation speed of 100 rpm, extruded in the form of a strand, and then cut into pellets of the ethylene polymer (β-4). The pellets were used as a measurement sample to measure the physical properties thereof. Table 3 shows results of the measurement.

[Ethylene Polymer (β-5)]

An ethylene/4-methyl-1-pentene copolymer commercially available from Prime Polymer Co., Ltd. (trade name: ULTZEX 1520L) was used. Pellets of the product were used as a measurement sample to measure the physical properties thereof, and Table 3 shows results of the measurement.

[Ethylene Polymer (β-6)]

An ethylene/4-methyl-1-pentene copolymer commercially available from Prime Polymer Co., Ltd. (trade name: ULTZEX 15150J) was used. Pellets of the product were used as a measurement sample to measure the physical properties thereof, and Table 3 shows results of the measurement.

[Table 3]

| Ethylene polymer (β) | | β-1 | β-2 | β-3 | β-4 | β-5 | β-6 | β-7 |
|---|---|---|---|---|---|---|---|---|
| Comonomer species | - | 1-hexene | 1-hexene | 1-hexene | 1-octane | 4-methyl-1-pentene | 4-methyl-1 -pentene | - |
| MFR | g/10 min. | 1.0 | 2.0 | 3.8 | 1.5 | 2.3 | 15.4 | 5.0 |
| D | $kg/m^3$ | 915 | 913 | 915 | 894 | 914 | 915 | 919 |
| Sum of Me branch and Et branch A + B | /1000 C | *1 | *1 | *1 | *1 | *1 | *1 | 8.1 |
| [η] | dl/g | 2.05 | 1.71 | 1.50 | 1.42 | 1.61 | 1.05 | 1.14 |
| Mw | - | 115000 | 92000 | 79000 | 83000 | 90000 | 41000 | 307000 |
| $([\eta_0]/Mw^{0.776})\times10^4$ | | 2.42 | 2.40 | 2.37 | 2.16 | 2.30 | 2.76 | 0.63 |
| MT | g | 2.1 | 1.2 | 0.4 | 2.0 | 1.4 | 0.2 | 7.3 |

*1 Detection limit (0.02/1000 C) or lower

[Example 1]

The ethylene polymer ($\alpha$-1) powder to which 850 ppm of SUMILIZER (registered trademark) GP (manufactured by Sumitomo Chemical Company, Limited) and 210 ppm of calcium stearate (manufactured by Nitto Chemical Industry Co., Ltd.) had been added and the ethylene polymer ($\beta$-1) were blended with each other at a weight ratio of 80:20, and the resultant mixture was melt-kneaded with a 20-mm$\varphi$ counter-rotation twin screw extruder (manufactured by Toyo Seiki Seisaku-sho, Ltd.) under conditions of a predetermined temperature of 200°C and a screw rotation speed of 100 rpm, extruded in the form of a strand, and then cut into pellets of an ethylene polymer composition ($\gamma$-1). The pellets were used as a measurement sample to measure the physical properties thereof, and Table 4-1 shows result of the measurement. The pellets were used to form a film by inflation molding. Table 4-1 shows bubble stability during the film formation and physical properties of the film.

[Examples 2 to 19]

Types of the ethylene polymer ($\alpha$) and ethylene polymer ($\beta$) and the blend ratio in Example 1 were changed as shown in Tables 4-1, 4-2, and 4-3. Except for these changes, pellets of ethylene polymer compositions ($\gamma$-2) to ($\gamma$-19), which were ethylene polymer compositions ($\gamma$), and inflation films thereof were produced as in Example 1. Tables 4-1, 4-2, and 4-3 show physical properties of the pellets, bubble stability during the film formation, and physical properties of the films.

[Comparative Examples 1 and 2]

Types of the ethylene polymer ($\alpha$) and ethylene polymer ($\beta$) and the blend ratio in Example 1 were changed as shown in Table 4-4. Except for these changes, pellets of ethylene polymer compositions ($\gamma$-20) and ($\gamma$-21) and inflation films thereof were produced as in Example 1. Table 4-4 shows physical properties of the pellets, bubble stability during the film formation, and physical properties of the films. In Comparative Examples 1 and 2, the MFR of the ethylene polymer ($\beta$-6) was larger than the upper limit of the requirement (1') specified in the present invention. Hence, the bubble stability and dart impact strength were insufficient.

[Comparative Example 3]

Types of the ethylene polymer ($\alpha$) and ethylene polymer ($\beta$) and the blend ratio in Example 1 were changed as shown in Table 4-4. Except for these changes, pellets of an ethylene polymer composition ($\gamma$-22) were produced as in Example 1. Table 4-4 shows physical properties of the pellets. In Comparative Example 3, the $\eta_0/Mw^{6.8}$ and $[\eta]/Mw^{0.776}$ of the ethylene polymer ($\alpha$-7) were larger than the upper limits of the requirements (4) and (5) specified in the present invention, respectively. Hence, the formability was insufficient, which led to failure in formation of an inflation film.

[Comparative Example 4]

Types of the ethylene polymer ($\alpha$) and ethylene polymer ($\beta$) and the blend ratio in Example 1 were changed as shown in Table 4-4. Except for these changes, pellets of an ethylene polymer composition ($\gamma$-23) and an inflation film thereof were produced as in Example 1. Table 4-4 shows physical properties of the pellets, bubble stability during the film formation, and physical properties of the film. In Comparative Example 4, the sum of the number of methyl branches and the number of ethyl branches in the ethylene polymer ($\alpha$-8) was larger than the upper limit of the requirement (3) specified in the present invention, and the $\eta_0/Mw^{6.8}$ and $[\eta]/Mw^{0.776}$ thereof were smaller than the lower limits of the requirements (4) and (5) specified in the present invention, respectively. Hence, the dart impact strength and blocking resistance were insufficient.

[Comparative Example 5]

Types of the ethylene polymer ($\alpha$) and ethylene polymer ($\beta$) and the blend ratio in Example 1 were changed as shown in Table 4-4. Except for these changes, pellets of an ethylene polymer composition ($\gamma$-24) and an inflation film thereof were produced as in Example 1. Table 4-4 shows physical properties of the pellets, bubble stability during the film formation, and physical properties of the film. In Comparative Example 5, the sum of the number of methyl branches and the number of ethyl branches in the ethylene polymer ($\beta$-7) was larger than the upper limit of the requirement (2') specified in the present invention. Hence, the dart impact strength was insufficient.

[Table 4-1]

| Example/Comparative Example | | | | Example 1 | Example 2 | Example 3 | Example 4 | Example 5 | Example 6 | Example 7 |
|---|---|---|---|---|---|---|---|---|---|---|
| Ethylene polymer $\alpha$ | Type | | - | $\alpha$-1 | $\alpha$-1 | $\alpha$-1 | $\alpha$-1 | $\alpha$-1 | $\alpha$-1 | $\alpha$-1 |
| | $MT_\alpha$ | | g | 8.2 | 8.2 | 8.2 | 8.2 | 8.2 | 8.2 | 8.2 |
| | Weight fraction ($W_\alpha$) | | - | 0.80 | 0.60 | 0.40 | 0.20 | 0.80 | 0.60 | 0.40 |
| Ethylene polymer $\beta$ | Type | | - | $\beta$-1 | $\beta$-1 | $\beta$-1 | $\beta$-1 | $\beta$-3 | $\beta$-3 | $\beta$-3 |
| | $MT_\beta$ | | g | 2.1 | 2.1 | 2.1 | 2.1 | 0.4 | 0.4 | 0.4 |
| | Weight fraction ($W_\beta$) | | - | 0.20 | 0.40 | 0.60 | 0.80 | 0.20 | 0.40 | 0.60 |
| Ethylene polymer composition $\gamma$ | Type | | - | $\gamma$-1 | $\gamma$-2 | $\gamma$-3 | $\gamma$-4 | $\gamma$-5 | $\gamma$-6 | $\gamma$-7 |
| | $MT_\gamma$ | | g | 10.3 | 10.8 | 10.5 | 9.1 | 8.5 | 7.6 | 6.4 |
| | $MT_\gamma/(MT_\alpha \times W_\alpha + MT_\beta \times W_\beta)$ | | | 1.5 | 1.9 | 2.3 | 2.7 | 1.3 | 1.5 | 1.8 |
| | Bubble stability | | - | A | A | A | A | B | B | B |
| | External haze | | % | 55 | 55 | 38 | 24 | 50 | 44 | 34 |
| | Dart impact strength | | g | 290 | 400 | 470 | 900 | 280 | 310 | 380 |
| | Blocking coefficient | | mN/cm | 0.0 | 0.0 | 0.0 | 0.0 | 0.0 | 0.0 | 0.0 |
| | Rz | MD | nm | | | | | | | |
| | | TD | nm | | | | | | | |

[Table 4-2]

| Example/Comparative Example | | | | Example 8 | Example 9 | Example 10 | Example 11 | Example 12 | Example 13 | Example 14 |
|---|---|---|---|---|---|---|---|---|---|---|
| Ethylene polymer α | Type | | - | α-2 | α-2 | α-2 | α-2 | α-2 | α-2 | α-2 |
| | $MT_\alpha$ | | g | 7.3 | 7.3 | 7.3 | 7.3 | 7.3 | 7.3 | 7.3 |
| | Weight fraction ($W_\alpha$) | | - | 0.80 | 0.80 | 0.70 | 0.85 | 0.70 | 0.50 | 0.70 |
| Ethylene polymer β | Type | | - | β-1 | β-2 | β-2 | β-4 | β-4 | β-4 | β-5 |
| | $MT_\beta$ | | g | 2.1 | 1.2 | 1.2 | 2.0 | 2.0 | 2.0 | 1.4 |
| | Weight fraction ($W_\beta$) | | - | 0.20 | 0.20 | 0.30 | 0.15 | 0.30 | 0.50 | 0.30 |
| Ethylene polymer composition γ | Type | | - | γ-8 | γ-9 | γ-10 | γ-11 | γ-12 | γ-13 | γ-14 |
| | $MT_\gamma$ | | g | 9.1 | 7.9 | 7.8 | 8.6 | 8.5 | 7.8 | 7.9 |
| | $MT_\gamma/(MT_\alpha \times W_\alpha + MT_\beta \times W_\beta)$ | | | 1.5 | 1.3 | 1.4 | 1.3 | 1.5 | 1.7 | 1.4 |
| | Bubble stability | | - | A | B | B | B | B | B | B |
| | External haze | | % | 36 | 33 | 33 | 37 | 34 | 27 | 34 |
| | Dart impact strength | | g | 200 | 200 | 220 | 270 | 530 | 1200 | 200 |
| | Blocking coefficient | | mN/cm | 0.0 | 0.0 | 0.0 | 0.9 | 1.4 | 7.1 | 0.0 |
| | Rz | MD | nm | | | | | | | |
| | | TD | nm | | | | | | | |

[Table 4-3]

| Example/Comparative Example | | | | Example 15 | Example 16 | Example 17 | Example 18 | Example 19 |
|---|---|---|---|---|---|---|---|---|
| Ethylene polymer $\alpha$ | Type | | - | $\alpha$-3 | $\alpha$-3 | $\alpha$-4 | $\alpha$-5 | $\alpha$-6 |
| | $MT_\alpha$ | | g | 7.6 | 7.6 | 8.9 | 6.2 | 10.2 |
| | Weight fraction ($W_\alpha$) | | - | 0.80 | 0.65 | 0.80 | 0.70 | 0.80 |
| Ethylene polymer $\beta$ | Type | | - | $\beta$-1 | $\beta$-4 | $\beta$-1 | $\beta$-4 | $\beta$-1 |
| | $MT_\beta$ | | g | 2.1 | 2.0 | 2.1 | 2.0 | 2.1 |
| | Weight fraction ($W_\beta$) | | - | 0.20 | 0.35 | 0.20 | 0.30 | 0.20 |
| Ethylene polymer composition $\gamma$ | Type | | - | $\gamma$-15 | $\gamma$-16 | $\gamma$-17 | $\gamma$-18 | $\gamma$-19 |
| | $MT_\gamma$ | | g | 9.5 | 8.4 | 10.5 | 7.2 | 11.5 |
| | $MT_\gamma/(MT_\alpha \times W_\alpha + MT_\beta \times W_\beta)$ | | | 1.5 | 1.5 | 1.4 | 1.5 | 1.3 |
| | Bubble stability | | - | A | B | A | B | A |
| | External haze | | % | 41 | 36 | 47 | 67 | 64 |
| | Dart impact strength | | g | 250 | 570 | 560 | 200 | 330 |
| | Blocking coefficient | | mN/cm | 0.0 | 0.8 | | | 0.0 |
| | Rz | MD | nm | 390 | 460 | | | |
| | | TD | nm | 260 | 500 | | | |

[Table 4-4]

| Example/Comparative Example | | | Comparative Example 1 | Comparative Example 2 | Comparative Example 3 | Comparative Example 4 | Comparative Example 5 |
|---|---|---|---|---|---|---|---|
| Ethylene polymer α | Type | - | α-1 | α-1 | α-7 | α-8 | α-2 |
| | MTα | g | 8.2 | 8.2 | 0.4 | 7.3 | 7.3 |
| | Weight fraction ($W_\alpha$) | - | 0.60 | 0.40 | 0.80 | 0.80 | 0.80 |
| Ethylene polymer β | Type | - | β-6 | β-6 | β-1 | β-1 | β-7 |
| | $MT_\beta$ | g | 0.2 | 0.2 | 2.1 | 2.1 | 7.3 |
| | Weight fraction ($W_\beta$) | - | 0.40 | 0.60 | 0.20 | 0.20 | 0.20 |
| Ethylene polymer composition γ | Type | - | γ-20 | γ-21 | γ-22 | γ-23 | γ-24 |
| | $MT_\gamma$ | g | 5.9 | 4.0 | 0.7 | 8.9 | 7.3 |
| | $MT_\gamma/(MT_\alpha \times W_\alpha + MT_\beta \times W_\beta)$ | | 1.2 | 1.2 | 0.9 | 1.4 | 1.0 |
| | Bubble stability | - | C | D | Film formation failed | B | B |
| | External haze | % | 37 | 33 | | 14 | 30 |
| | Dart impact strength | g | 170 | 160 | | 130 | 130 |
| | Blocking coefficient | mN/cm | 0.0 | 0.0 | | 25 | 0.0 |
| | Rz MD | nm | | | | 90 | |
| | Rz TD | nm | | | | 80 | |

## Claims

1. An ethylene polymer composition (γ) comprising:

an ethylene polymer (α) which is a copolymer of ethylene and an α-olefin having 4 to 10 carbon atoms and which satisfies each of the following requirements (1) to (5); and
an ethylene polymer (β) which is a copolymer of ethylene and an α-olefin having 4 to 10 carbon atoms and which satisfies each of the following requirements (1') to (3'), wherein
weight fraction [Wα] of the ethylene polymer (α) is in the range of not less than 0.2 and not more than 0.9, and weight fraction [Wβ] of the ethylene polymer (β) is in the range of not less than 0.1 and not more than 0.8 (the sum of the Wα and the Wβ is 1.0);
Ethylene polymer (α):

(1) a melt flow rate (MFR) at 190°C under a load of 2.16 kg is in the range of not less than 0.1 g/10 min and not more than 30 g/10 min,
(2) density is in the range of not less than 875 $kg/m^3$ and not more than 945 $kg/m^3$,
(3) the sum of the number of methyl branches [Me(/1000C)] and the number of ethyl branches [Et(/1000C)] per 1000 carbon atoms in $^{13}$C-NMR analysis [(Me + Et)(/1000C)] is not more than 1.80,
(4) a ratio $\eta_0/Mw^{6.8}$ of zero shear viscosity at 200°C [$\eta_0$(P)] to a weight average molecular weight measured by GPC-viscometry (GPC-VISCO) to the power 6.8 ($Mw^{6.8}$) is in the range of not less than $0.03 \times 10^{-30}$ and not more than $7.5 \times 10^{-30}$, and
(5) a ratio [η] /$Mw^{0.776}$ of intrinsic viscosity measured in decalin at 135°C [[η](dl/g)] to a weight average molecular weight measured by GPC-viscometry (GPC-VISCO) to the power 0.776 ($Mw^{0.776}$) is in the range of not less than $0.90 \times 10^{-4}$ and not more than $1.65 \times 10^{-4}$;

Ethylene polymer (β):

(1') a melt flow rate (MFR) at 190°C under a load of 2.16 kg is in the range of not less than 0.1 g/10 min and not more than 10 g/10 min,
(2') the sum of the number of methyl branches [Me(/1000C)] and the number of ethyl branches [Et(/1000C)] per 1000 carbon atoms in $^{13}$C-NMR analysis [(Me + Et)(/1000C)] is not more than 1.80, and
(3') a ratio [η] /$Mw^{0.776}$ of intrinsic viscosity measured in decalin at 135°C [[η](dl/g)] to a weight average molecular weight measured by GPC-viscometry (GPC-VISCO) to the power 0.776 ($Mw^{0.776}$) is in the range of not less than $1.90 \times 10^{-4}$ and not more than $2.80 \times 10^{-4}$.

2. The ethylene polymer composition (γ) according to Claim 1, wherein melt tension [MTγ(g)] of the ethylene polymer composition (γ) at 190°C, melt tension [MTα(g)] of the ethylene polymer (α), melt tension [MTβ(g)] of the ethylene polymer (β), and the Wα and Wβ satisfy the following equation (Eq-1-1)

$$1.2 < MT\gamma/(MT\alpha \times W\alpha + MT\beta \times W\beta) \leq 3.0 \quad \ldots \text{(Eq-1-1)}$$

3. The ethylene polymer composition (γ) according to any one of Claims 1 and 2, further comprising a thermoplastic resin other than any of the ethylene polymer (α) and the ethylene polymer (β).

4. A shaped article formed of the ethylene polymer composition (γ) according to any one of Claims 1 to 3.

5. A film formed of the ethylene polymer composition (γ) according to any one of Claims 1 to 3.

6. The film according to Claim 5, wherein the film is free from an anti-blocking agent.

7. A multilayer film having at least one surface layer that is a layer formed of the ethylene polymer composition (γ) according to any one of Claims 1 to 3.

8. The multilayer film according to Claim 7, wherein the surface layer formed of the ethylene polymer composition (γ) is free from an anti-blocking agent.

## Patentansprüche

1. Ethylenpolymerzusammensetzung ($\gamma$), umfassend:

   ein Ethylenpolymer ($\alpha$), das ein Copolymer aus Ethylen und einem $\alpha$-Olefin mit 4 bis 10 Kohlenstoffatomen ist und das jede der nachfolgenden Voraussetzungen (1) bis (5) erfüllt; und
   ein Ethylenpolymer ($\beta$), das ein Copolymer aus Ethylen und einem $\alpha$-Olefin mit 4 bis 10 Kohlenstoffatomen ist und das jede der nachfolgenden Voraussetzungen (1') bis (3') erfüllt,
   wobei
   der Gewichtsanteil [W$\alpha$] des Ethylenpolymers ($\alpha$) im Bereich von nicht weniger als 0,2 und nicht mehr als 0,9 liegt und der Gewichtsanteil [W$\beta$] des Ethylenpolymers ($\beta$) im Bereich von nicht weniger als 0,1 und nicht mehr als 0,8 (die Summe von W$\alpha$ und W$\beta$ ist 1,0) liegt;
   Ethylenpolymer ($\alpha$):

   (1) eine Schmelzflussrate (MFR) bei 190° C bei einer Belastung von 2,16 kg liegt im Bereich von nicht weniger als 0,1 g/10 Min. und nicht mehr als 30 g/10 Min.,
   (2) eine Dichte liegt im Bereich von nicht weniger als 875 kg/$m^3$ und nicht mehr als 945 kg/$m^3$,
   (3) die Summe der Anzahl von Methylverzweigungen [Me (/1000C)] und der Anzahl von Ethylverzweigungen [Et (/1000C)] pro 1000 Kohlenstoffatomen in einer $^{13}$C-NMR-Analyse [(Me + Et) (/1000C)] beträgt nicht mehr als 1,80,
   (4) ein Verhältnis $\eta_0/Mw^{6,8}$ von Null Scherviskosität bei 200° C [$\eta_0$ (P)] zu einem durchschnittlichen Molekulargewicht, gemessen durch GPC-Viskosimetrie (GPC-VISCO), zur Energie 6,8 ($Mw^{6,8}$) liegt im Bereich von nicht weniger als 0,03 x $10^{-30}$ und nicht mehr als 7,5 x $10^{-30}$, und
   (5) ein Verhältnis [$\eta$] / $Mw^{0,776}$ der Grenzviskosität, gemessen in Decalin bei 135° C [[$\eta$] (dl/g)], zu einem durchschnittlichen Molekulargewicht, gemessen durch GPC-Viskosimetrie (GPC-VISCO), zur Energie 0,776 ($Mw^{0,776}$) liegt im Bereich von nicht weniger als 0,90 x $10^{-4}$ und nicht mehr als 1,65 x $10^{-4}$,

   Ethylenpolymer ($\beta$):

   (1') eine Schmelzflussrate (MFR) bei 190° C bei einer Belastung von 2,16 kg liegt im Bereich von nicht weniger als 0,1 g/10 Min. und nicht mehr als 10 g/10 Min.,
   (2') die Summe der Anzahl von Methylverzweigungen [Me (/1000C)] und der Anzahl von Ethylverzweigungen [Et (/1000C)] pro 1000 Kohlenstoffatomen in einer $^{13}$C-NMR-Analyse [(Me + Et) (/1000C)] beträgt nicht mehr als 1,80, und
   (3') ein Verhältnis [$\eta$] / $Mw^{0,776}$ der Grenzviskosität, gemessen in Decalin bei 135° C [[$\eta$] (dl/g)], zu einem durchschnittlichen Molekulargewicht, gemessen durch GPC-Viskosimetrie (GPC-VISCO), zur Energie 0,776 ($Mw^{0,776}$) liegt im Bereich von nicht weniger als 1,90 x $10^{-4}$ und nicht mehr als 2,80 x $10^{-4}$.

2. Ethylenpolymerzusammensetzung ($\gamma$) nach Anspruch 1, wobei der Schmelzdruck [MT$\gamma$(g)] der Ethylenpolymerzusammensetzung ($\gamma$) bei 190° C, die Schmelzspannung [MT$\alpha$ (g)] des Ethylenpolymers ($\alpha$), die Schmelzspannung [MT$\beta$(g)] des Ethylenpolymers ($\beta$) und W$\alpha$ und W$\beta$ die nachfolgende Gleichung (Eq-1-1) erfüllen

$$1.2 < MT\gamma/(MT\alpha \times W\alpha + MT\beta \times W\beta) \leq 3.0 \quad \ldots \quad (Eq\text{-}1\text{-}1)$$

3. Ethylenpolymerzusammensetzung ($\gamma$) nach einem der Ansprüche 1 und 2, ferner umfassend ein thermoplastisches Harz, das nicht eines des Ethylenpolymers ($\alpha$) und des Ethylenpolymers ($\beta$) ist.

4. Geformter Artikel, gebildet aus der Ethylenpolymerzusammensetzung ($\gamma$) nach einem der Ansprüche 1 bis 3.

5. Schicht, gebildet aus der Ethylenpolymerzusammensetzung ($\gamma$) nach einem der Ansprüche 1 bis 3.

6. Schicht nach Anspruch 5, wobei die Schicht frei von einem Antiblockiermittel ist.

7. Vielschichtige Schicht mit mindestens einer Oberflächenschicht, die eine Schicht ist, die aus der Ethylenpolymerzusammensetzung ($\gamma$) nach einem der Ansprüche 1 bis 3 gebildet ist.

**8.** Vielschichtige Schicht nach Anspruch 7, wobei die Oberflächenschicht, die aus der Ethylenpolymerzusammensetzung ($\gamma$) gebildet ist, frei von einem Antiblockiermittel ist.

## Revendications

**1.** Composition de polymère d'éthylène ($\gamma$) comprenant :

un polymère d'éthylène ($\alpha$) consistant en un copolymère d'éthylène et d'une $\alpha$-oléfine présentant 4 à 10 atomes de carbone et satisfaisant chacune des conditions (1) à (5) ci-dessous, et
un polymère d'éthylène ($\beta$) consistant en un copolymère d'éthylène et d'une $\alpha$-oléfine présentant 4 à 10 atomes de carbone et satisfaisant chacune des conditions (1') à (3') ci-dessous ; dans laquelle
la fraction pondérale [W$\alpha$] du polymère d'éthylène ($\alpha$) se situe dans la plage allant de 0,2 à 0,9, et la fraction pondérale [W$\beta$] du polymère d'éthylène ($\beta$) se situe dans la plage allant de 0,1 à 0,8 (la somme de W$\alpha$ et de W$\beta$ valant 1,0) ;
Polymère d'éthylène ($\alpha$) :

(1) l'indice de fluidité à chaud (MFR) à 190 °C sous une charge de 2,16 kg se situe dans la plage allant de 0,1 g/10 min à 30 g/10 min,
(2) la densité se situe dans la plage allant de 875 kg/$m^3$ à 945 kg/$m^3$,
(3) la somme du nombre de ramifications méthyle [Me(/1000C)] et du nombre de ramifications éthyle [Et(/1000C)] pour 1000 atomes de carbone établie par l'analyse RMN $^{13}C$ [(Me + Et)(/1000C)] est inférieure ou égale à 1,80,
(4) le rapport $\eta_0/Mw^{6,8}$ de la viscosité à cisaillement nul à 200 °C [$\eta_0$(P)] à la masse moléculaire moyenne en poids mesurée par GPC et viscosimétrie (GPC-VISCO) à la puissance 6,8 ($Mw^{6,8}$) se situe dans la plage allant de 0,03 x $10^{-30}$ à 7,5 $\times$ $10^{-30}$, et
(5) le rapport $[\eta]/Mw^{0,776}$ de la viscosité intrinsèque mesurée dans de la décaline à 135 °C [[$\eta$](dl/g)] à la masse moléculaire moyenne en poids mesurée par GPC et viscosimétrie (GPC-VISCO) à la puissance 0,776 ($Mw^{0,776}$) se situe dans la plage allant de 0,90 x $10^{-4}$ à 1,65 x $10^{-4}$ ;

Polymère d'éthylène ($\beta$) :

(1') l'indice de fluidité à chaud (MFR) à 190°C sous une charge de 2,16 kg se situe dans la plage allant de 0,1 g/10 min à 10 g/10 min,
(2') la somme du nombre de ramifications méthyle [Me(/1000C)] et du nombre de ramifications éthyle [Et(/1000C)] pour 1000 atomes de carbone établie par analyse RMN $^{13}C$ [(Me + Et)(/1000C)] est inférieure ou égale à 1,80, et
(3') le rapport $[\eta]/Mw^{0,776}$ de la viscosité intrinsèque mesurée dans de la décaline à 135 °C [[$\eta$](dl/g)] à une masse moléculaire moyenne en poids mesurée par GPC et viscosimétrie (GPC-VISCO) à la puissance 0,776 ($Mw^{0,776}$) se situe dans la plage allant de 1,90 x $10^{-4}$ à 2,80 x $10^{-4}$.

**2.** Composition de polymère d'éthylène ($\gamma$) selon la revendication 1, dans laquelle la tension à l'état fondu [MT$\gamma$(g)] de la composition de polymère d'éthylène ($\gamma$) à 190 °C, la tension à l'état fondu [MT$\alpha$(g)] du polymère d'éthylène ($\alpha$), la tension à l'état fondu [MT$\beta$(g)] du polymère d'éthylène ($\beta$) et les valeurs W$\alpha$ et W$\beta$ satisfont l'équation suivante (Eq-1-1) :

$$1,2 < MT\gamma/(MT\alpha \text{ x } W\alpha + MT\beta \text{ x } W\beta) \leq 3,0 \text{ ... (Eq-1-1)}$$

**3.** Composition de polymère d'éthylène ($\gamma$) selon l'une quelconque des revendications 1 et 2, comprenant en outre une résine thermoplastique autre que le polymère d'éthylène ($\alpha$) et le polymère d'éthylène ($\beta$).

**4.** Article façonné formé à partir de la composition de polymère d'éthylène ($\gamma$) selon l'une quelconque des revendications 1 à 3.

**5.** Film formé à partir de la composition de polymère d'éthylène ($\gamma$) selon l'une quelconque des revendications 1 à 3.

**6.** Film selon la revendication 5, ledit film étant dépourvu d'agent antiadhésif.

**7.** Film multicouche présentant au moins une couche de surface consistant en une couche formée à partir de la composition de polymère d'éthylène ($\gamma$) selon l'une quelconque des revendications 1 à 3.

**8.** Film multicouche selon la revendication 7, dans lequel la couche de surface formée à partir de la composition de polymère d'éthylène ($\gamma$) est dépourvue d'agent antiadhésif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H726079 B
- JP H2276807 B
- JP H4213309 B
- JP 5008221 A
- JP H8311260 B
- JP 2006080578 A
- JP 2011001545 A
- WO 2007034920 A
- JP H1501950 B
- JP H1502036 B
- JP H3179005 B
- JP H3179006 B
- JP H3207703 B
- JP H3207704 B
- US 5321106 A


### Non-patent literature cited in the description


- **TOSHITAKA KANAI ; AKIRA FUNAKI.** *Sen'i Gakkaishi,* 1986, vol. 41, T-1
- **KAZUO SOGA et al.** Catalytic Olefin Polymerization. Kodansha Scientific Ltd, 1990, 376
- **WALTER KAMINSKY.** *Makromol.Chem.,* 1992, vol. 193, 606
- **ZENJIRO OSAWA et al.** Koubunshi no jumyou yosoku to choujumyouka gijutsu. NTS Inc, 2002, 481
- **KAGAKU RYOUIKI ZOUKAN.** *NMR-Sousetsu to Jikken Guide [I],* vol. 141, 132-133
- **C GABRIEL ; H.MUNSTEDT.** *J.Rheol.,* 2003, vol. 47 (3), 619
- **H. MUNSTEDT ; D. AUHL.** *J. Non-Newtonian Fluid Mech.,* 2005, 128, , 62-69
- **F.N. COGSWELL.** Polymer Melt Rheology. Wiley, 1981
- **KAZUO MATSUURA et al.** Polyethylene Gijutsu Dokuhon. Kogyo Chosakai Publishing Co., Ltd, 2001, 32
- **WALTHER BURCHARD.** ADVANCES IN POLYMER SCIENCE. *Branched Polymer II,* 1999, vol. 143, 137
- **R. CHIANG.** *J. Polym. Sci.,* 1959, vol. 36 (91), 94
- **R. CHIANG.** *J. Polym. Sci.,* 1958, vol. 28 (235), 237
- **A. S. HOFFMAN ; B. A. FRIES ; P. C. CONDIT.** *J. Polym. Sci. Part C,* 1963, vol. 4 (109), 119
- **KAZUO MATSUURA ; NAOTAKA MIKAMI.** Polyethylene Gijutsu Dokuhon. Kogyo Chosakai Publishing Co., Ltd, 2001, 45
- **Z. CRUBISIC ; P. REMPP ; H. BENOIT.** *J. Polym. Sci.,* 1967, vol. B5, 753
- **KAGAKU RYOUIKI ZOUKAN.** *NMR-Sousetsu to Jikken Guide [I],* vol. 141, 132, , 133